# EUROPEAN PATENT APPLICATION

(11) **EP 2 663 073 A1**
(43) Date of publication of application: **13.11.2013**
(21) Application number: 12732314.5
(22) Date of filing: 06.01.2012
(51) Int. Cl.: H04N 7/173

(54) **REPRODUCTION DEVICE, METHOD FOR CONTROLLING REPRODUCTION DEVICE, GENERATION DEVICE, METHOD FOR CONTROLLING GENERATION DEVICE, RECORDING MEDIUM, DATA STRUCTURE, CONTROL PROGRAM, AND RECORDING MEDIUM CONTAINING SAID PROGRAM**

(30) Priority: 07.01.2011 JP 2011002046; 15.06.2011 JP 2011133654
(71) Applicant: Sharp Kabushiki Kaisha, Osaka-shi, Osaka 545-8522 (JP)
(72) Inventor: WATANABE, Shuichi, Osaka-shi, Osaka 545-8522 (JP)
(74) Representative: Müller - Hoffmann & Partner
(86) International application number: PCT/JP2012/050147
(87) International publication number: WO 2012/093714

(57) **Abstract**

A client (1) includes: a content selecting section (13) for selecting contents in accordance with Attributes of combination included in an MPD, that indicate combinations of contents to be reproduced simultaneously; a request executing section (14) for requesting a server (2) to send the selected contents; and a content reproducing section (15) for reproducing the contents sent from the server (2) in response to the request, in the selected combination.

## Description

### Technical Field

The present invention relates to a reproducing device for reproducing contents obtained via a communication network and, in particular, a reproducing device configured to decide, with reference to descriptive information, which content is to be obtained, the descriptive information including information on contents.

### Background Art

Conventionally, technologies for providing contents via a communication network are widely used. For example, below-mentioned Patent literature 1 discloses a content streaming service system for streaming contents, in which a client (i) sends a request for contents to a server via HTTP, (ii) receives the contents sent in response to the request, and (iii) streams the received contents.

An example of such a system includes AHS (Adaptive HTTP Streaming) of 3GPP. It is known that the AHS of 3GPP uses descriptive information (metadata) referred to as an MPD (Media Presentation Description). The MPD including information on contents (media), such as attributions and reproducing order, is sent to a client before or during a streaming service. The client refers to the received MPD so as to decide contents to be requested from a server.

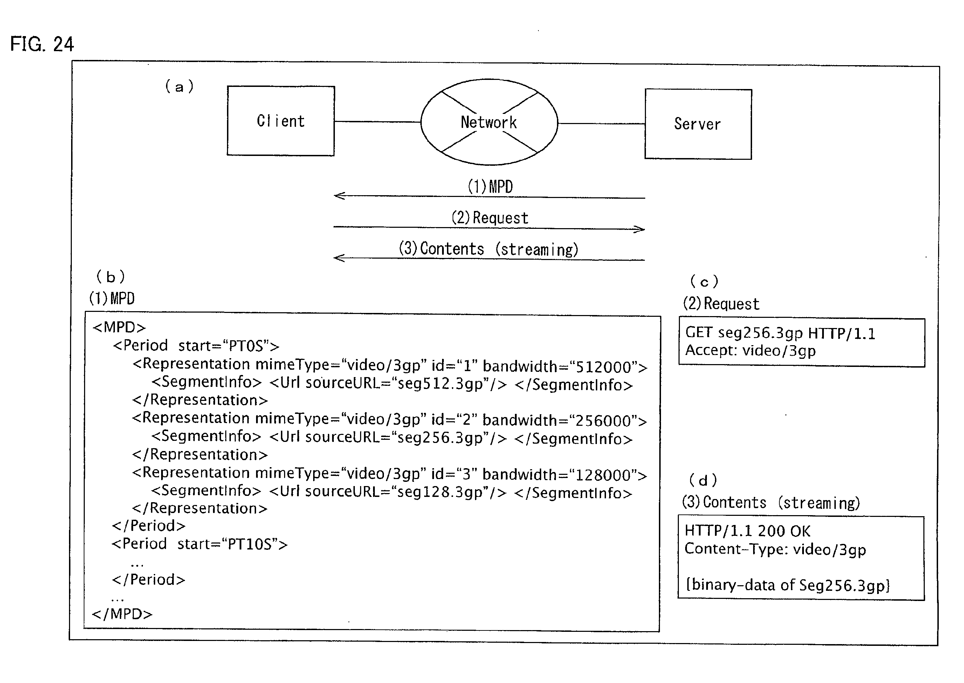

The following description will discuss, with reference to Fig. 24, how to select a content with the use of an MPD and to reproduce the selected content. Fig. 24 illustrates a conventional technique for selecting a content with the use of an MPD and reproducing the selected content. Particularly, (a) of Fig. 24 illustrates a stream of data transmitted between a client and a server, (b) of Fig. 24 illustrates an example of MPD data, (c) of Fig. 24 illustrates an example of request data, and (d) of Fig. 24 illustrates an example of content data.

As illustrated in (a) of Fig. 24, the client and the server are configured to communicate via a network. The server sends an MPD (1) to the client. Note that, in (a) of Fig. 24, the MPD is assumed to be sent via HTTP, however, the transmission form of the MPD is not particularly limited.

The MPD describes (i) Periods, each of which indicates a time interval and (ii) Representations, which indicates information on contents to be reproduced during the time interval. The MPD can be data illustrated, for example, in (b) of Fig. 24.

The MPD of (b) of Fig. 24 includes (i) (an element of) a Period which begins with <Period start="PTOS"> and ends with </Period>, and subsequently (ii) a Period which begins with <Period start="PT10S"> and ends with </Period>.

The Period which begins with <Period start="PTOS"> includes three (elements of) Representations each of which begin with <Representation ~> and ends with </Representation>. As such, a plurality of Representations included in a single Period indicate alternative of contents. In other words, any one of a plurality of Representations included in a same Period can be selected and reproduced.

Each (element of) Representation can include Attributes indicating an attribution of a content which corresponds to the Representation. Examples of Attributes of each Representation can include content information (in particular, information on reproduction of a content), such as a codec, a bit rate, a frame rate, and a resolution. A client refers to values of Attributes in order to select a Representation.

For example, in a case where, with respect to a same image content, a plurality of Representations are described whose codec, bit rate, frame rate, resolution and other information are different, the client then selects a Representation having a codec, a bit rate, a frame rate, a resolution, and other information which correspond to those reproducible on the client's machine.

In the example of (b) of Fig. 24, as Attributes of each Representation, mimeType indicating a reproducible data format, an identifier (id), and a bit rate (a bandwidth in (b) of Fig. 24) of Representation are described. Note, however, that the Attributes are not limited to those.

A client, which has selected a Representation, sends to a server a request (2) for a content which corresponds to the selected Representation (see (a) of Fig. 24).

The request can be data as illustrated in (c) of Fig. 24. (c) of Fig. 24 exemplifies data for requesting a content of "seg256.3gp" with the use of a GET method for obtaining contents. That is, (c) of Fig. 24 illustrates an example of request data in a case where a Representation with id="2" (see the second id from the top of (b) of Fig. 24) is selected. From the MPD of (b) of Fig. 24, it is possible to specify that a content of "video/3gp" can be obtained. Therefore, in the example of (c) of Fig. 24, an Accept header indicates that the client's machine can reproduce a content of "video/3gp".

A server, which has received such a request, will send the requested content (3) to the client, as illustrated in (a) of Fig. 24.

The content can be sent in a response message format as illustrated in (d) of Fig. 24. (d) of Fig. 24 illustrates an example of data including: a status code (200 OK) which indicates successful receipt of the request; a header row (Content-Type:~) which indicates the type of the content; and a data entity (binary data of seg256.3gp) of the requested content.

Further, for Representations in an MPD, Attributes of "group" can be described. Groups with different values mean that they are different components. Representations belonging to a same group cannot be reproduced simultaneously, whereas Representations belonging to different groups can be reproduced simultaneously.

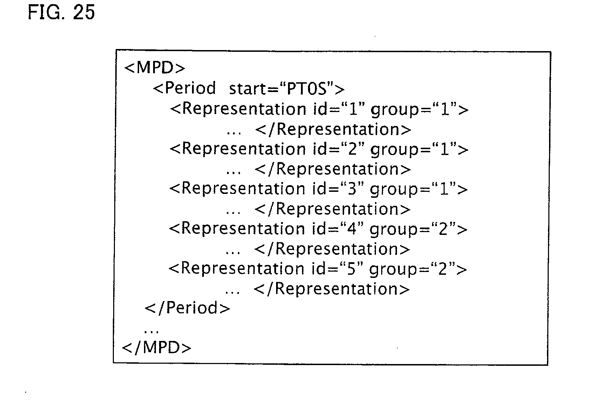

The following description will detail in this regard with reference to Fig. 25. Fig. 25 illustrates an example of MPD data including Attributes of "group" in accordance with a conventional technique. In this example, a Period which begins with "PTOS" includes five Representations of id=1 through id=5.

Of the five Representations, Representations of id=1 through id=3 belong to group="1", and the rest two Representations belong to group="2". In this case, the Representations of id=1 through id=3 belonging to the same group cannot be reproduced simultaneously, and also the Representations of id=4 and id=5 cannot be reproduced simultaneously. However, a Representation belonging to group="1" and a Representation belonging to group="2" can be reproduced simultaneously. For example, the Representation of id=1 can be reproduced simultaneously with the Representation of id=4 or id=5.

### Citation Lists

### Patent literature

Patent literature 1
Japanese Patent Application Publication, Tokukai, No. 2005-110244 A (Publication Date: April 21, 2005)

### Summary of Invention

### Technical Problem

However, Representations cannot necessarily be selected in desired combinations. Accordingly, in the above-described conventional technology, a client must select Representations in an appropriate combination from a plurality of Representations. This causes a problem that the client has to perform a burdensome process for selecting Representations. Since Representations mean contents, the selection of Representations can be interpreted as being selection of contents.

When, for example, a client selects one content and tries to reproduce the content simultaneously with other content(s), it is necessary to check whether or not the selected content can be reproduced in combination with each of the available contents. Whether or not each of the available contents can be selected may depend on types or combination of contents. Then, of all contents which are confirmed to be able to be combined with the selected content, the client has to select a content(s) with reference to attribution information (Attribute) on the content(s). Consequently, a process performed by the client will be enormous and complicated. Further, there is a risk that contents are reproduced in a combination which is not intended by content providers.

The present invention has been accomplished in view of such problems, and an object of the present invention is to provide a reproducing device and the like, which can easily select contents to be reproduced simultaneously.

### Solution to Problem

In order to solve the above-mentioned problem, a reproducing device in accordance with the present invention is a reproducing device which (i) selects contents with reference to selection content information including at least information on contents which are available from a server at request, (ii) requests the server to send the selected contents, and (iii) reproduces the contents sent in response to the request, the reproducing device including: selecting means for selecting, from the contents available from the server at request, a combination of contents with reference to combination information included in the selection content information, the combination information indicating combinations of contents to be reproduced simultaneously; requesting means for requesting the server to send the contents selected by the selecting means; and reproducing means for reproducing the contents sent from the server in response to the request of the requesting means, in the combination selected by the selecting means.

In order to solve the above-mentioned problem, a method for controlling a reproducing device in accordance with the present invention is a method for controlling a reproducing device which (i) selects contents with reference to selection content information including at least information on contents which are available from a server at request, (ii) requests the server to send the selected contents, and (iii) reproduces the contents sent in response to the request, the method including the steps of: selecting, from the contents available from the server at request, a combination of contents with reference to combination information included in the selection content information, the combination information indicating combinations of contents to be reproduced simultaneously; requesting the server to send the contents selected in the selecting step; and reproducing the contents sent from the server in response to the request in the requesting step, in the combination selected in the selecting step.

According to the configuration, the selection content information, which includes at least information on contents available from the server at request, further includes combination information indicating combinations of contents to be reproduced simultaneously. Contents are selected in accordance with the combination information. The selected contents are requested to be sent, and the contents sent in response to the request are reproduced in the selected combination.

According to the configuration, the reproducing device can simultaneously reproduce contents in the combination indicated by the combination information. That is, the reproducing device can easily select contents in an appropriate combination by deciding contents with reference to the combination information, without checking appropriateness of all possible combinations of contents.

In order to solve the above-mentioned problem, a generating device in accordance with the present invention is a generating device for generating selection content information, the selection content information including at least information on contents which are available from a server at request by a reproducing device for reproducing contents, the generating device including: combination deciding means for deciding a combination of contents to be reproduced simultaneously, among the contents available from the server at request, the combination deciding means deciding the combination of contents with reference to combination condition information indicating combination conditions of the contents; and generating means for generating the selection content information, which includes combination information indicating the combination of contents decided by the combination deciding means.

In order to solve the above-mentioned problem, a method for controlling a generating device in accordance with the present invention is a method for controlling a generating device for generating selection content information, the selection content information including at least information on contents which are available from a server at request by a reproducing device for reproducing contents, including the steps of: deciding a combination of contents to be reproduced simultaneously, of the contents available from the server at request, with reference to combination condition information indicating combination conditions of the contents; and generating the selection content information, which includes combination information indicating the combination of contents decided in the deciding step.

According to the configuration, the generating device decides a combination of contents to be reproduced simultaneously with reference to the combination condition information indicating combination conditions of the contents, and generates the selection content information, which includes the combination information indicating the decided combination of contents.

Therefore, by obtaining the selection content information thus generated, the reproducing device can specify (i) contents available from the server at request and (ii) a combination of contents, which meets the combination condition indicated by the combination condition information.

The reproducing device can therefore simultaneously reproduce contents in a combination which meets the combination condition. That is, the reproducing device can easily select contents in a combination which meets the combination condition, by deciding contents with reference to the combination information, without checking appropriateness of all possible combinations of contents.

In order to solve the above-mentioned problem, a recording medium in accordance with the present invention is a computer-readable recording medium in which selection content information is stored, the selection content information including at least information on contents which are available from a server at request by a reproducing device for reproducing contents, the selection content information further including combination information indicating combinations of contents to be reproduced simultaneously, among the contents available from the server at request.

The reproducing device, which has read out the selection content information from the recording medium, can specify (i) contents available from the server at request, and (ii) a combination of content, which meets the combination condition indicated by the combination condition information.

This enables the reproducing device to simultaneously reproduce contents in the combination indicated by the combination information. That is, the reproducing device can easily select contents in an appropriate combination by deciding contents with reference to the combination information, without checking appropriateness of all possible combinations of contents.

A data structure in accordance with the present invention is a data structure of selection content information including at least information on contents which are available from a server at request by a reproducing device for reproducing contents, including: combination information indicating combinations of contents to be reproduced simultaneously, of the contents available from the server at request, the reproducing device (i) selecting a combination of contents from contents indicated by the selection content information, in accordance with the combination information, (ii) requesting the server to send the selected contents, and (iii) reproducing the contents sent from the server in response to the request, in the selected combination.

Since the data structure includes (i) information on contents available from the server at request, and (ii) combination information indicating combinations of contents to be reproduced simultaneously, the reproducing device can, by utilizing the data structure, (i) select a combination of contents from contents indicated by the selection content information in accordance with the combination information, (ii) request the server to send the selected contents, and (iii) reproduce the contents sent from the server in response to the request, in the selected combination.

This enables the reproducing device to simultaneously reproduce the contents in a combination indicated by the combination information. That is, the reproducing device can easily select contents in an appropriate combination by deciding contents with reference to the combination information, without checking appropriateness of all possible combinations of contents.

### Advantageous Effects of Invention

As described above, a reproducing device of the present invention is configured to include: selecting means for selecting, from the contents available from the server at request, a combination of contents with reference to combination information included in the selection content information, the combination information indicating combinations of contents to be reproduced simultaneously; requesting means for requesting the server to send the contents selected by the selecting means; and reproducing means for reproducing the contents sent from the server in response to the request of the requesting means, in the combination selected by the selecting means.

As described above, a method for controlling a reproducing device of the present invention is configured to include the steps of: selecting, from the contents available from the server at request, a combination of contents with reference to combination information included in the selection content information, the combination information indicating combinations of contents to be reproduced simultaneously; requesting the server to send the contents selected in the selecting step; and reproducing the contents sent from the server in response to the request in the requesting step, in the combination selected in the selecting step.

As described above, a generating device of the present invention is configured to include: combination deciding means for deciding a combination of contents to be reproduced simultaneously, of the contents available from the server at request, with reference to combination condition information indicating combination conditions of the contents; and generating means for generating the selection content information, which includes combination information indicating the combination of contents decided by the combination deciding means.

As described above, a method for controlling a generating device of the present invention is configured to include the steps of: deciding a combination of contents to be reproduced simultaneously, of the contents available from the server at request, with reference to combination condition information indicating combination conditions of the contents; and generating the selection content information, which includes combination information indicating the combination of contents decided in the deciding step.

As described above, a recording medium of the present invention is configured such that the selection content information further includes combination information indicating combinations of contents to be reproduced simultaneously, among the contents available from the server at request.

As described above, a data structure of the present invention is configured to include: combination information indicating combinations of contents to be reproduced simultaneously, of the contents available from the server at request, the reproducing device (i) selecting a combination of contents from the contents indicated by the selection content information, in accordance with the combination information, (ii) requesting the server to send the selected contents, and (iii) reproducing the contents sent from the server in response to the request, in the selected combination.

According to the configurations, the selection content information, which includes at least information on contents available from the server at request, also includes the combination information indicating combinations of contents to be reproduced simultaneously. The reproducing device thus (i) selects contents in accordance with the combination information, (ii) requests the server to send the selected contents, and (iii) reproduces the contents sent in response to the request, in the selected combination.

The present invention, therefore, has an effect that the reproducing device can easily select contents in an appropriate combination, without checking appropriateness of all possible combinations of contents.

### Brief Description of Drawings

Fig. 1

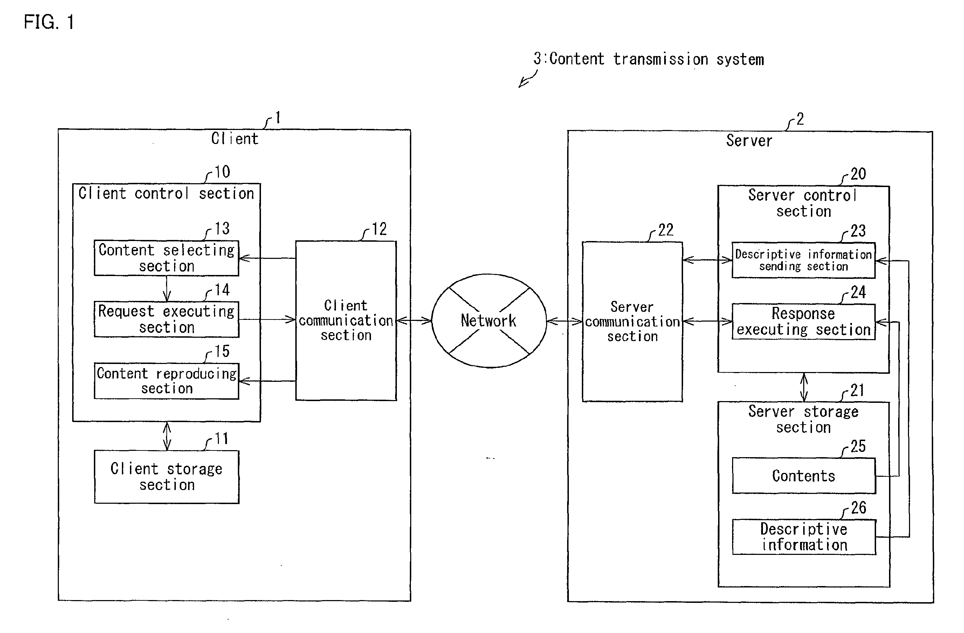

   Fig. 1 is a block diagram in accordance with an embodiment of the present invention, illustrating a main configuration of a client and a server, both of which are included in a content transmission system.
Fig. 2

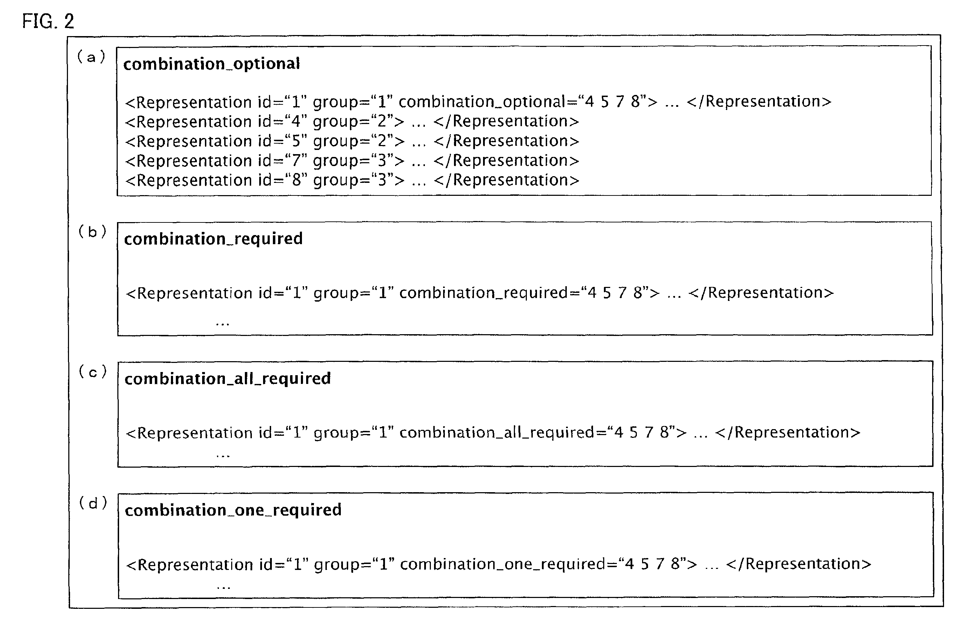

   Fig. 2 illustrates types of combination information and specific examples thereof. (a) of Fig. 2 illustrates combination information indicating optional candidates for combination, and specific examples thereof. (b) through (d) of Fig. 2 illustrate combination information for specifying counterparts for combination, and specific examples thereof.
Fig. 3

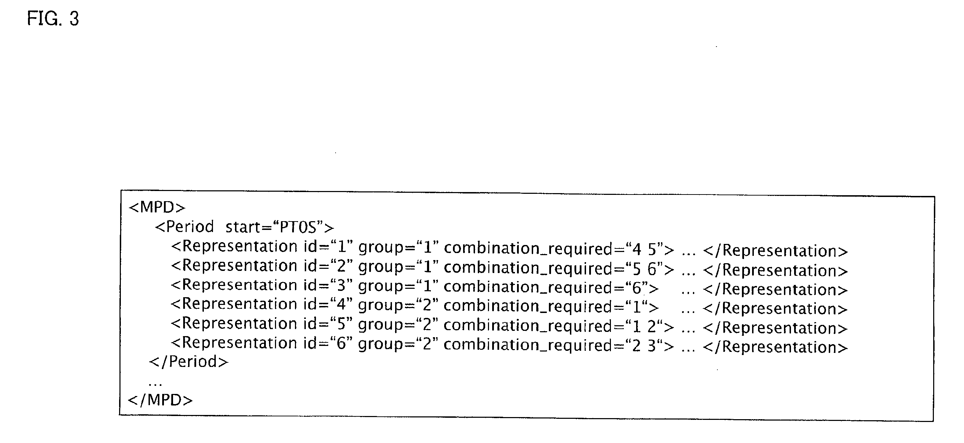

   Fig. 3 illustrates an example of an MPD including combination Attributes for combining two Representations.
Fig. 4

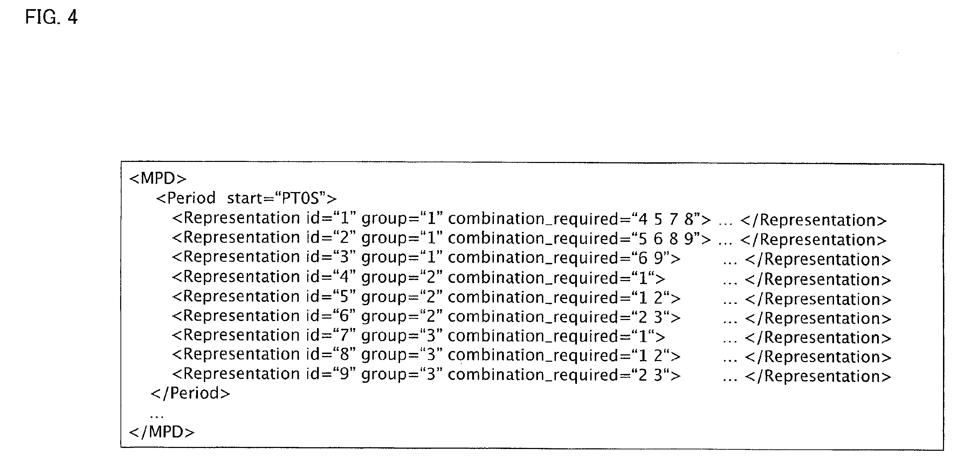

   Fig. 4 illustrates an example of an MPD including combination Attributes for combining three Representations.
Fig. 5

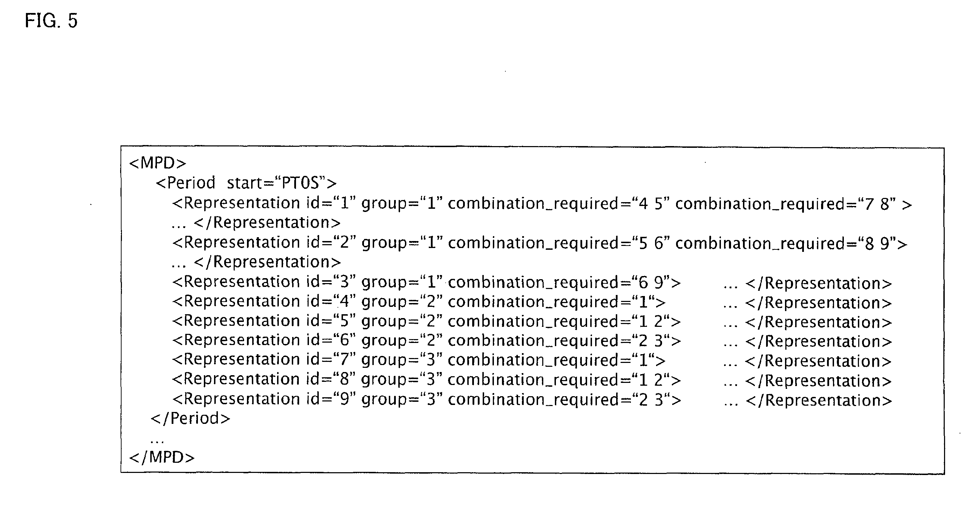

   Fig. 5 illustrates another example of an MPD including combination Attributes for combining three Representations.
Fig. 6

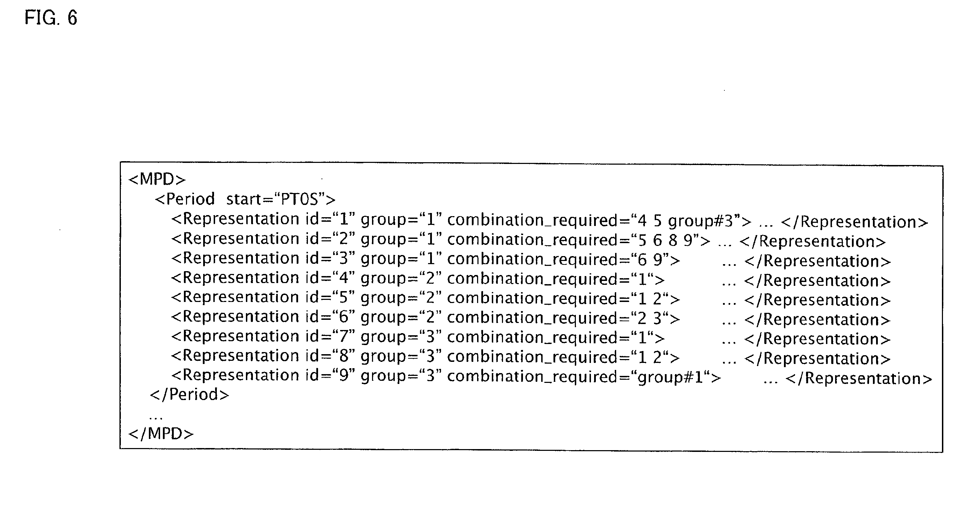

   Fig. 6 illustrates an example of an MPD which designates counterparts for combination on group basis.
Fig. 7

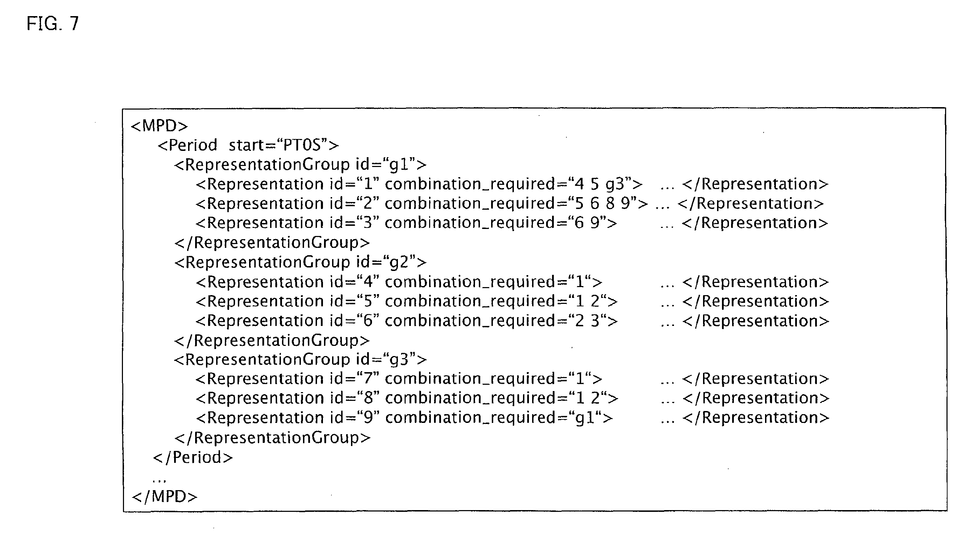

Fig. 7 illustrates an example of an MPD which designates counterparts for combination with the use of identification information for identifying a group.
Fig. 8

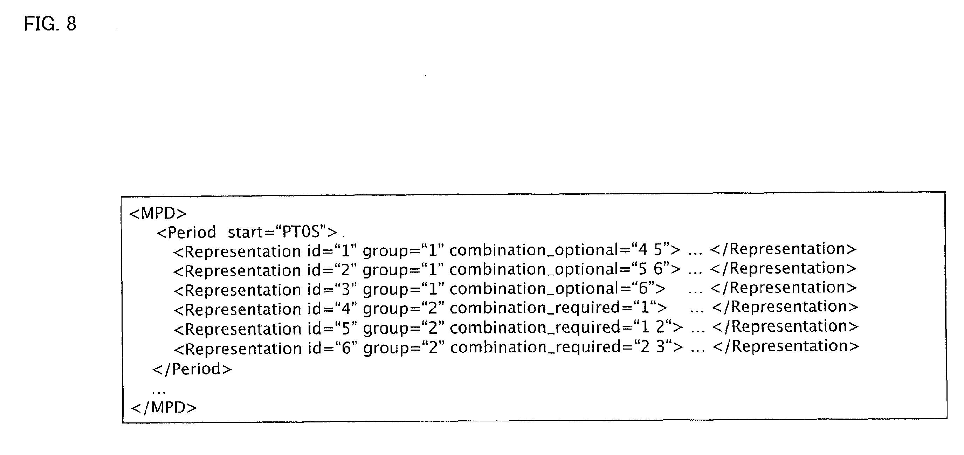

   Fig. 8 illustrates an example of an MPD which combine two Representations, the MPD including combination_required and combination_optional.
Fig. 9

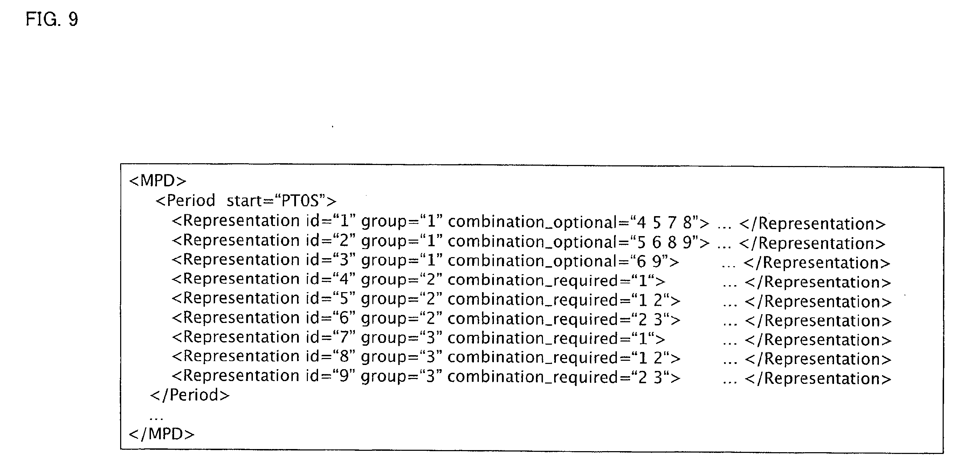

   Fig. 9 illustrates an example of an MPD which combine three Representations, the MPD including combination_required and combination_optional.
Fig. 10

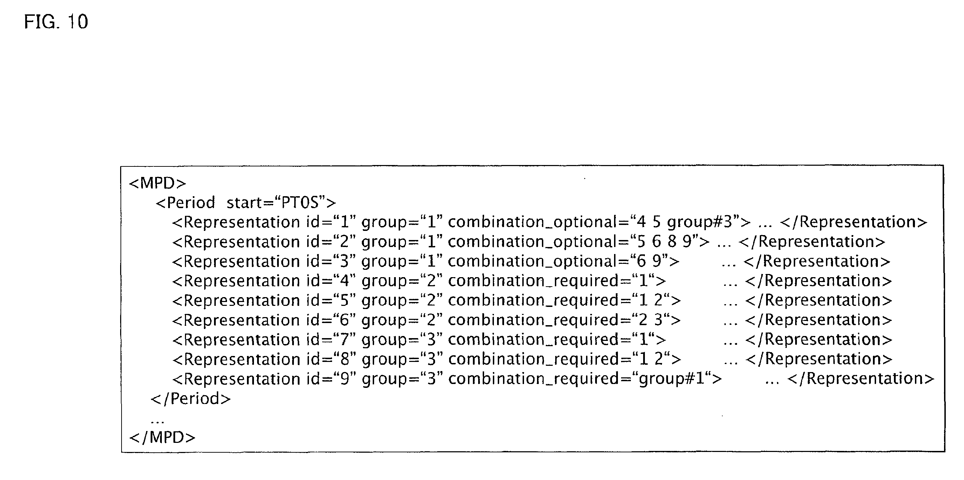

   Fig. 10 illustrates an example of an MPD which designates counterparts for combination or optional candidates for combination per group, the MPD including combination_required and combination_optional.
Fig. 11

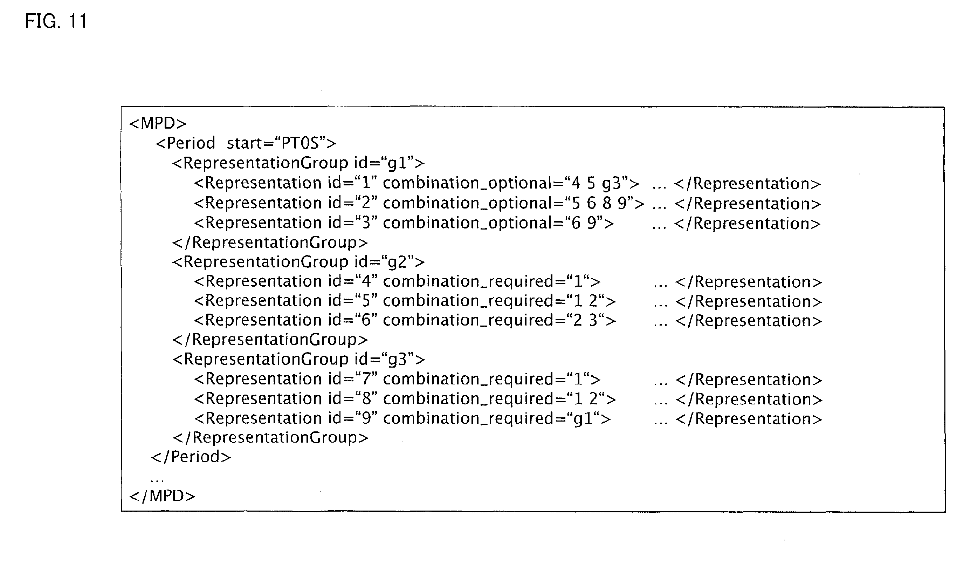

   Fig. 11 illustrates an example of an MPD which designates counterparts for combination or optional candidates for combination with the use of group identification information, the MPD including combination_required and combination_optional.
Fig. 12

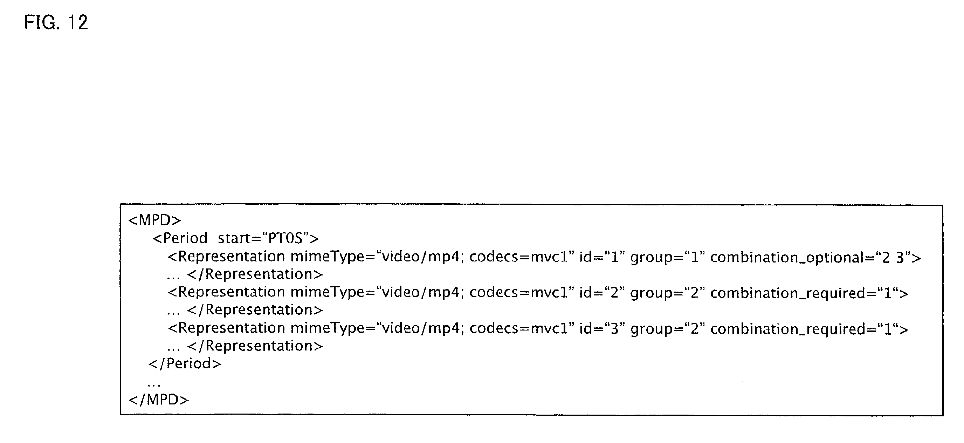

   Fig. 12 illustrates an example of an MPD suitable for multi-view image coded contents.
Fig. 13

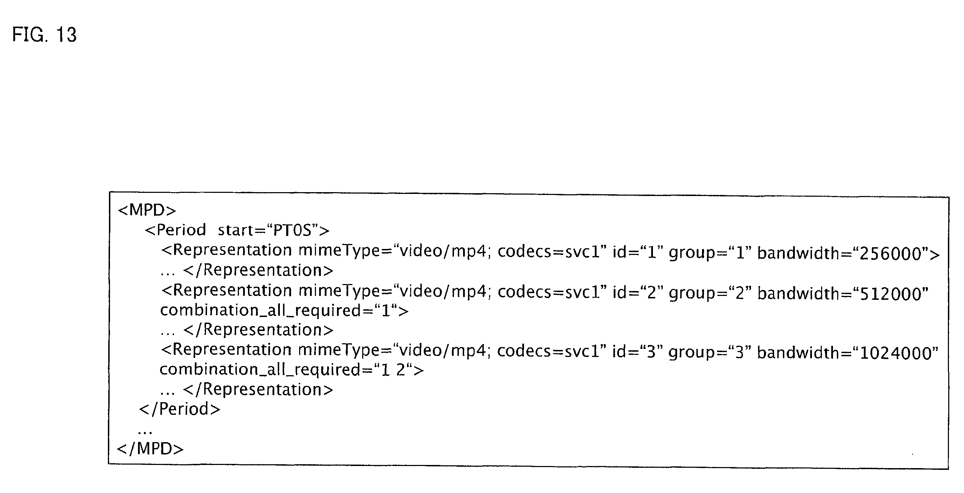

   Fig. 13 illustrates an example of an MPD including combination_all_required.
Fig. 14

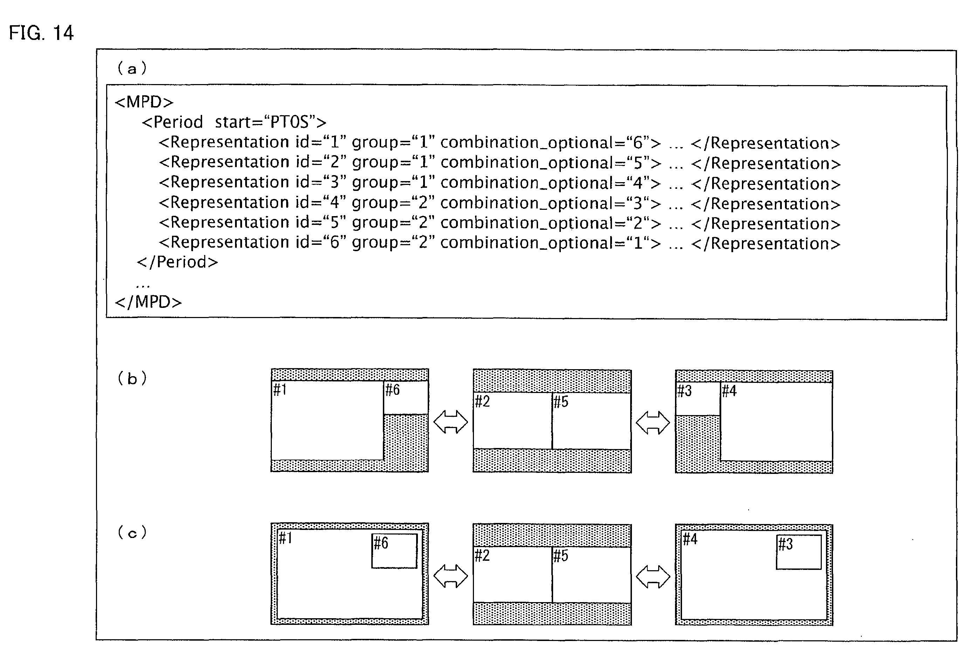

   Fig. 14 illustrates an example of an MPD including only combination_optional as combination information. (a) of Fig. 14 illustrates an example of the MPD, and (b) and (c) of Fig. 14 illustrate examples of display screens on the basis of the MPD.
Fig. 15

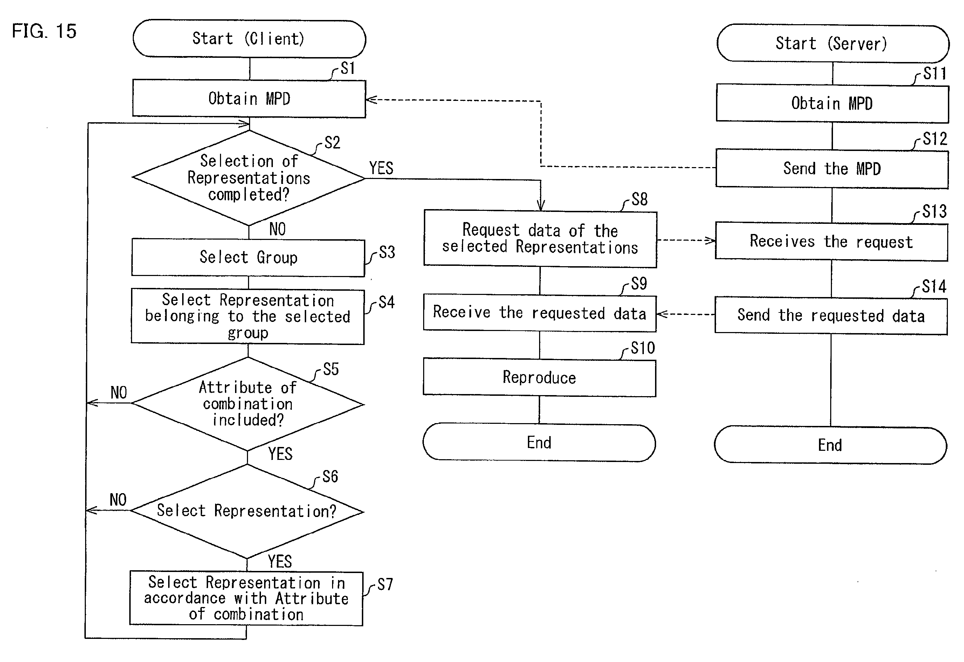

   Fig. 15 is a flow chart illustrating an example of a process performed by a client and a server.
Fig. 16

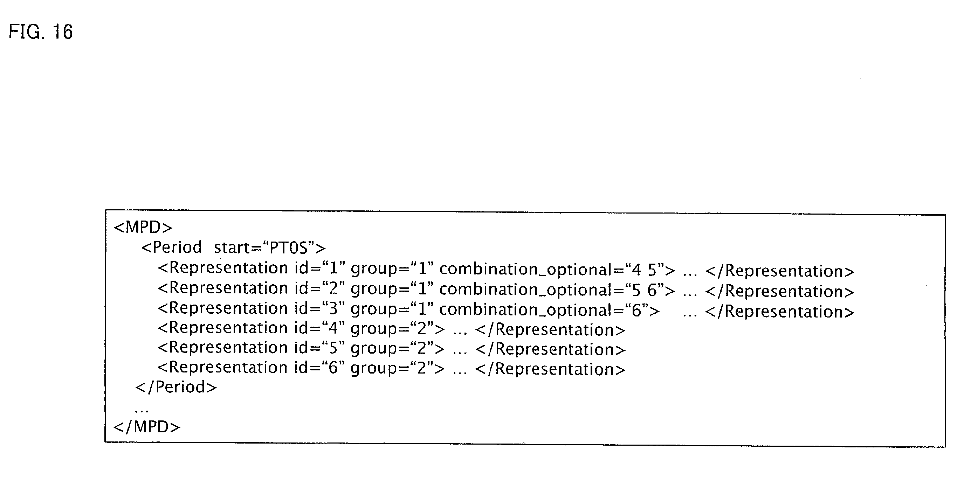

   Fig. 16 illustrates an example of an MPD including combination_optional, in which Attributes of combination of group 2 are omitted.
Fig. 17

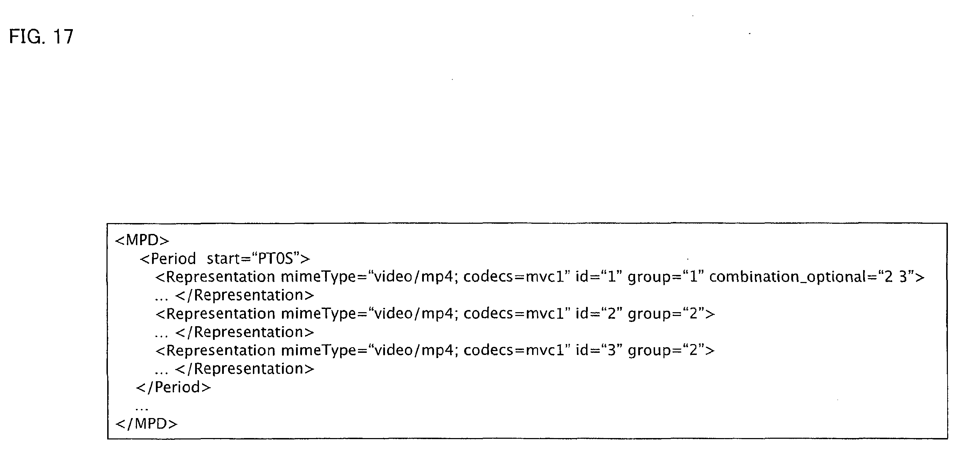

   Fig. 17 illustrates another example of an MPD including combination_optional, in which Attributes of combination of group 2 are omitted.
Fig. 18

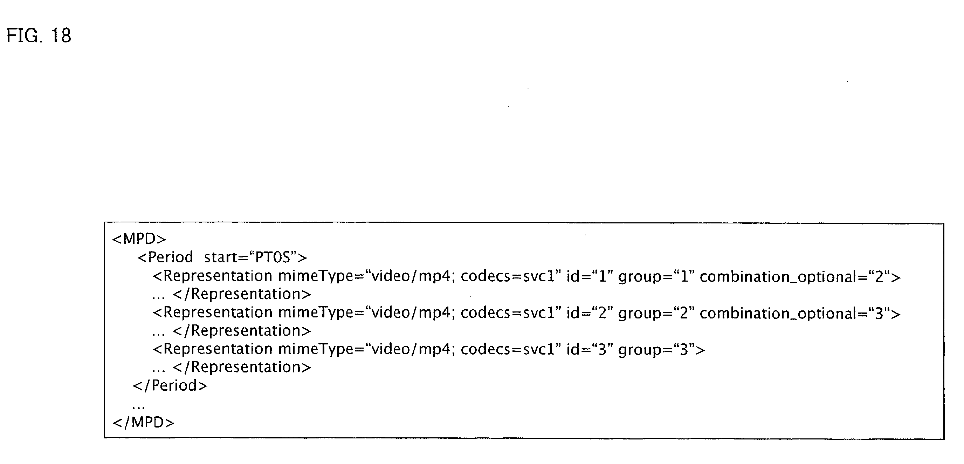

   Fig. 18 illustrates an example of an MPD including combination_optional, in which an Attribute of combination of group 3 is omitted.
Fig. 19

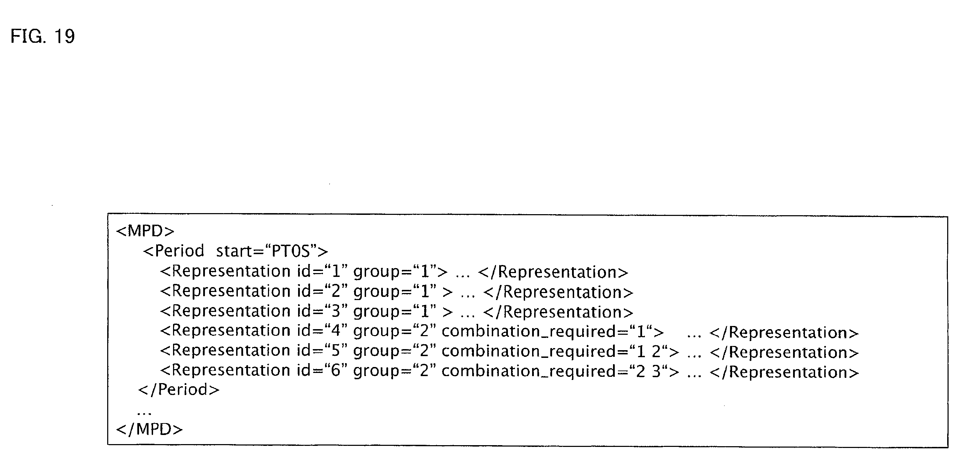

   Fig. 19 illustrates an example of an MPD including combination_required, in which Attributes of combination of group 1 are omitted.
Fig. 20

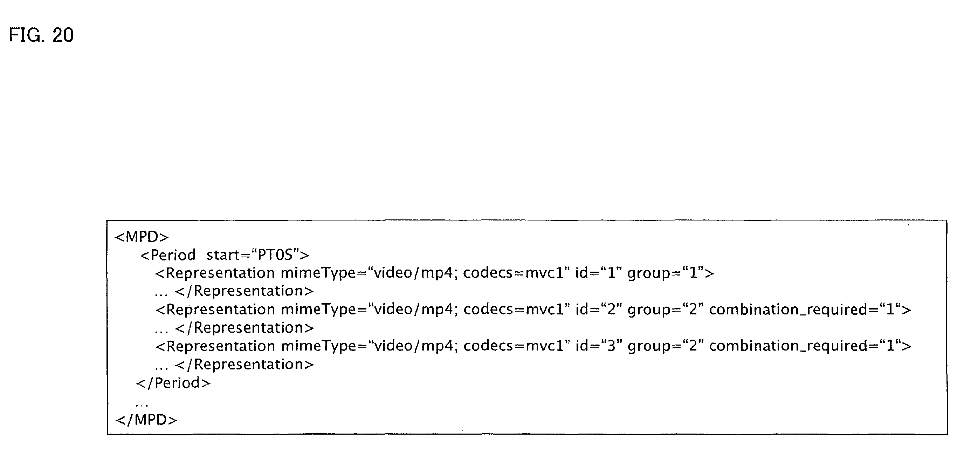

   Fig. 20 illustrates another example of an MPD including combination_required, in which an Attribute of combination of group 1 is omitted.
Fig. 21

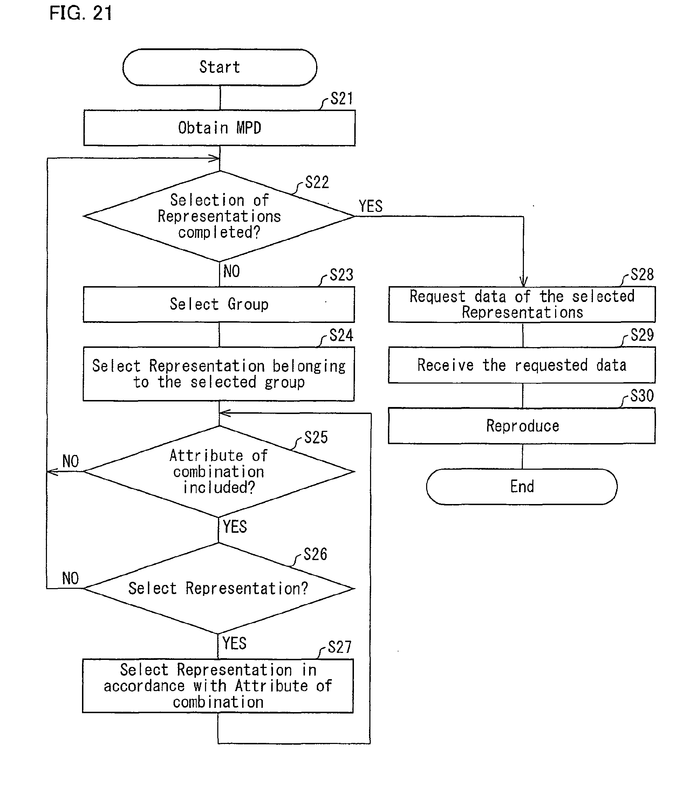

   Fig. 21 is a flow chart illustrating an example of a process performed by a client with the use of an MPD, in which part of Attributes of combination is omitted.
Fig. 22

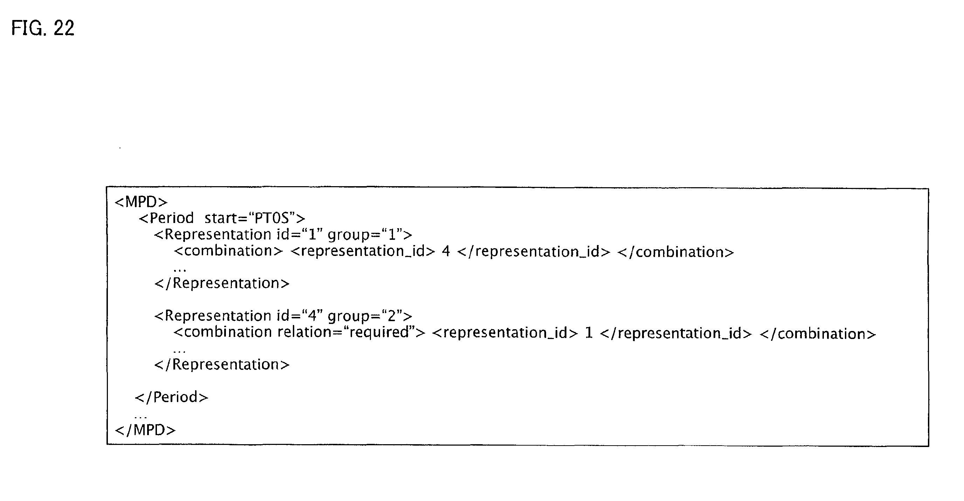

   Fig. 22 illustrates an example of an MPD, in which combinations of Representations are described with Elements.
Fig. 23

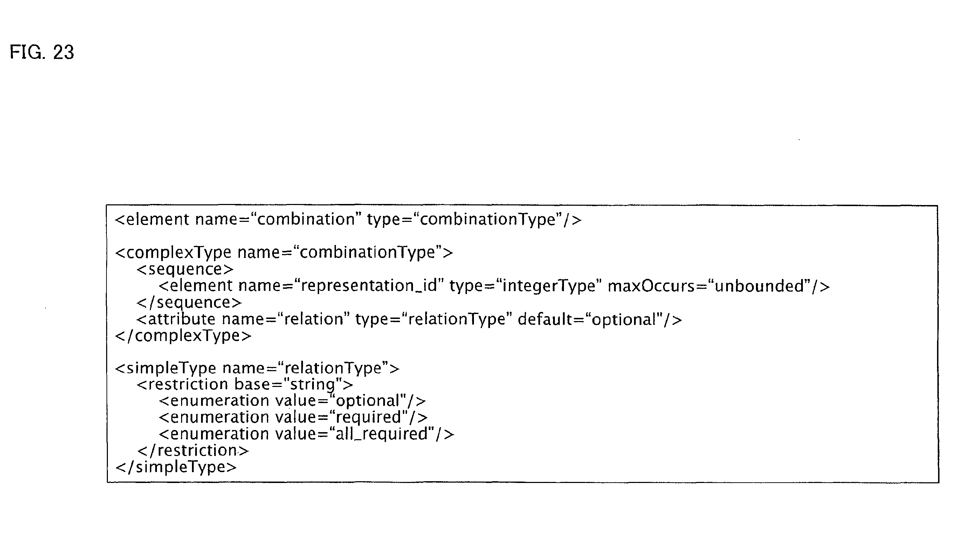

   Fig. 23 illustrates an example of a schema of an Element which describes combinations of Representations.
Fig. 24
   Fig. 24 illustrates a conventional technology for selecting contents with the use of an MPD and reproducing the selected contents. (a) of Fig. 24 illustrates a flow of data transmitted between a client and a server, (b) of Fig. 24 illustrates an example of MPD data, (c) of Fig. 24 illustrates an example of request data, and (d) of Fig. 24 illustrates an example of content data.
Fig. 25
   Fig. 25 illustrates an example of MPD data including Attributes of group in accordance with a conventional technology.
Fig. 26

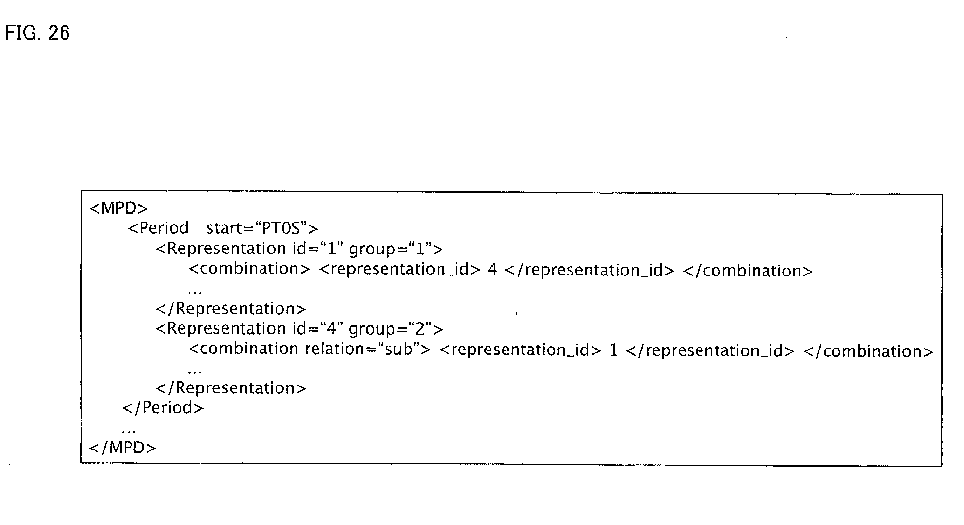

   Fig. 26 illustrates another example of an MPD, in which combinations of Representations are described with Elements.
Fig. 27

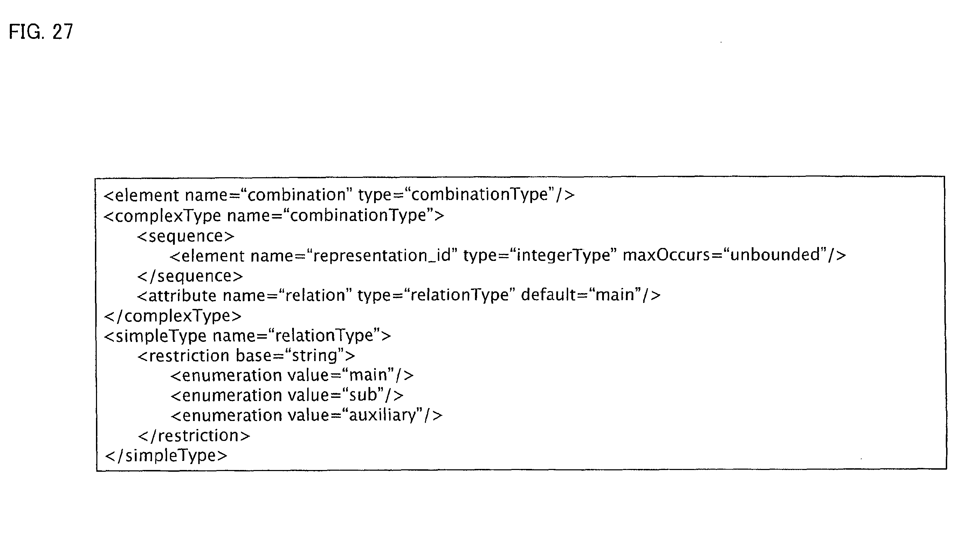

   Fig. 27 illustrates another example of a schema of an Element which describes combinations of Representations.
Fig. 28

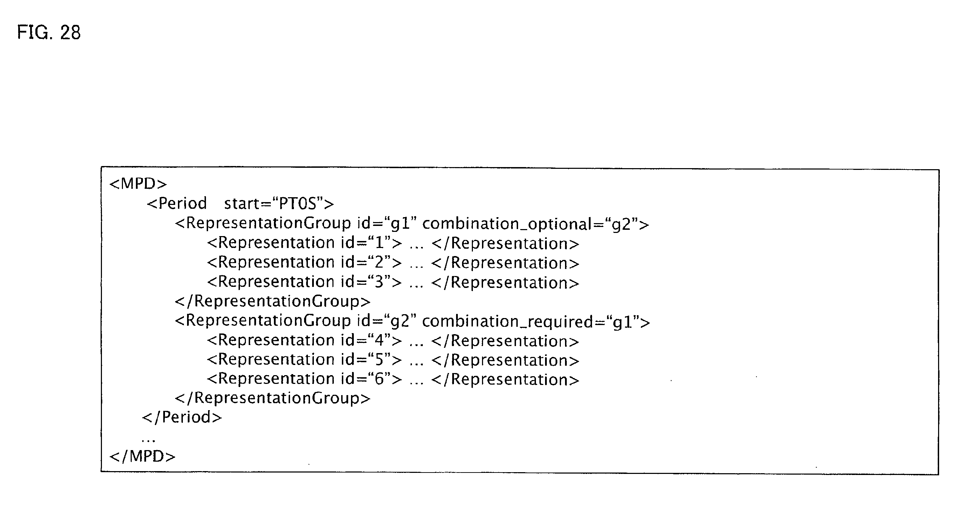

   Fig. 28 illustrates an example of an MPD in which combination Attributes are added to groups.
Fig. 29

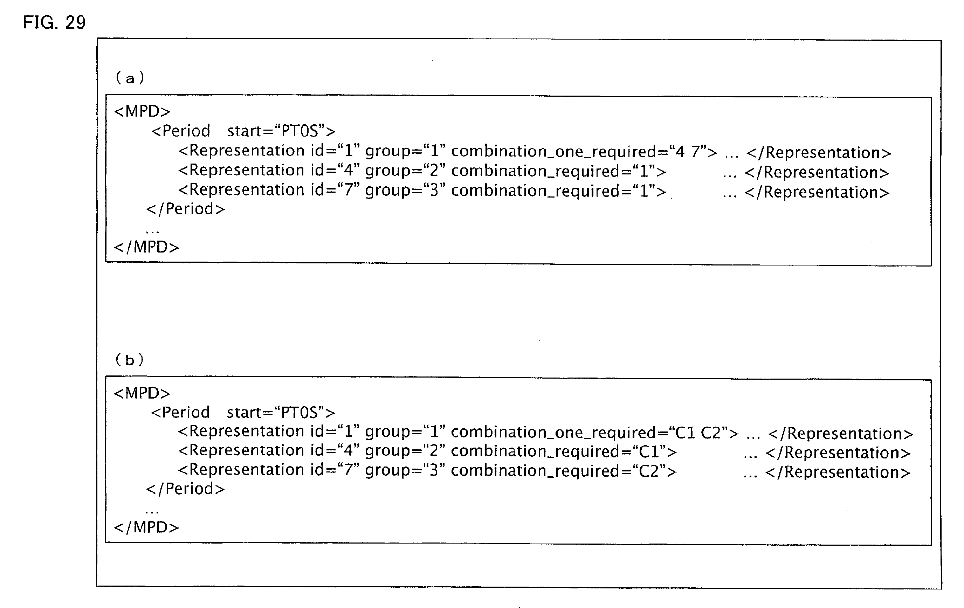

   Fig. 29 illustrates an example for specifying counterparts for combination with the use of combination ids. (a) of Fig. 29 illustrates an example of an MPD for specifying counterparts for combination without using combination ids, and (b) of Fig. 29 illustrates an example of an MPD for specifying counterparts for combination, which are identical to those in (a) of Fig. 29, with the use of combination ids.
Fig. 30

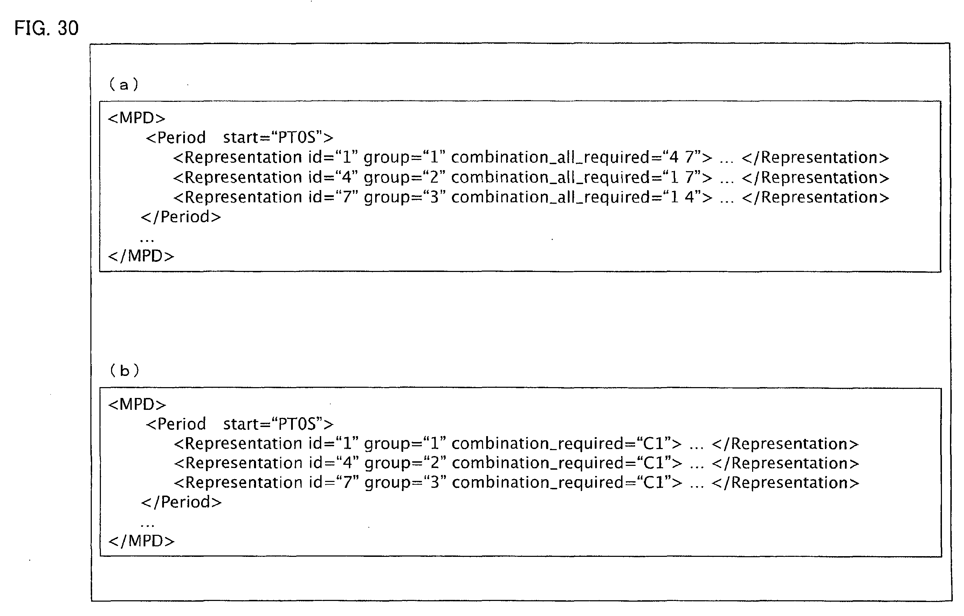

   Fig. 30 illustrates another example for specifying the counterparts for combination with the use of combination ids. (a) of Fig. 30 illustrates an example of an MPD for specifying counterparts for combination without using combination ids, and (b) of Fig. 30 illustrates an example of an MPD for specifying counterparts for combination, which are identical to those in (a) of Fig. 30, with the use of combination ids.

### Description of Embodiments

### [Embodiment 1]

The following description will discuss Embodiment 1 of the present invention in detail with reference to Fig. 1 through 15.

### [Overview of System]

Overview of a content transmission system of Embodiment 1 will be first described with reference to Fig. 1. Fig. 1 is a block diagram in accordance with Embodiment 1 of the present invention, illustrating a main configuration of a client (reproducing device) 1 and a server (generating device) 2, both of which are included in a content transmission system 3.

As illustrated in Fig. 1, the client 1 includes a client control section 10 for controlling total operations of the client 1, a client storage section 11 in which data to be used in the client 1 is stored, and a client communication section (communication section) 12 for the communication between the client 1 and an external device via a network. The client control section 10 includes a content selecting section (selecting means) 13, a request executing section (requesting means) 14, and a content reproducing section (reproducing means) 15.

The content selecting section 13 is configured to (i) obtain descriptive information (metadata) on contents, the descriptive information including information on contents which can be requested from the server 2, and (ii) select contents to be requested from the server 2 in accordance with the obtained descriptive information. Specifically, the content selecting section 13 receives an MPD (selection content information) as the descriptive information from the server 2 and selects, with reference to attribution information (Attribute) on respective Representations described in the MPD, contents to be requested from the server 2.

The MPD of Embodiment 1 includes combination information for specifying combinations of contents, which will be described later in detail. With reference to the combination information, the content selecting section 13 can easily select contents in an appropriate combination.

The request executing section 14 sends to the server 2 a request for the contents selected by the content selecting section 13, and thus obtains the contents. The following description will discuss an example in which the request executing section 14 sends a request via HTTP. In the example, the request executing section 14 generates and sends a request in a form illustrated in (c) of Fig. 24.

The content reproducing section 15 reproduces the contents received in response to the request from the request executing section 14, in the combination selected by the content selecting section 13. Note that the reproduced contents can be outputted from (i) a member included in the client 1, such as a display or a speaker or (ii) a member connected to the client 1 via a wired or wireless line.

The server 2 includes a server control section 20 for controlling total operations of the server 2, a server storage section 21 in which data to be used in the server 2 is stored, and a server communication section 22 for the communication between the server 2 and an external device via a network. The server control section 20 includes a descriptive information sending section 23 and a response executing section 24. And, the server storage section 21 stores contents 25 and descriptive information (selection content information) 26.

The descriptive information sending section (combination deciding means, generating means) 23 sends the descriptive information to the client 1. Specifically, the descriptive information sending section 23 (i) reads out the descriptive information 26 stored in the server storage section 21 and (ii) sends the descriptive information 26 thus read out to the client 1 via the server communication section 22. As described above, an MPD is used here as the descriptive information.

The response executing section 24 sends to the client 1 the contents corresponding to the request received from the client 1. Specifically, the response executing section 24 (i) reads out the contents 25 stored in the server storage section 21 upon receipt of the request and (ii) sends the contents 25 to the client 1 via the server communication section 22.

The contents 25 are data to be requested by the client 1. Examples of the contents 25 encompass video data, audio data, and character data.

The descriptive information 26 is information on contents (in Embodiment 1, the contents 25 stored in the server storage section 21) which can be supplied from the server 2 to the client 1. Specifically, the descriptive information 26 is an MPD including Periods in which Representations of contents which can be selected are described. For each Representation, its Attribute (such as a codec, a bit rate, a frame rate, and a resolution) is described.

Either or both of the contents 25 and the descriptive information 26 can be stored (i) in an external recording medium, which is attachable/detachable to the server 2 or (ii) in an external device, to which the server 2 can access. That is, a place where the contents 25 and the descriptive information 26 are stored is not specifically limited, provided that the contents 25 and the descriptive information 26 are stored so that the server 2 can obtain them.

Further, the server 2 or the above-mentioned external device can include (i) a content encoding section for encoding contents, and (ii) a descriptive information generating section for generating the descriptive information 26. With the configuration, at least one of the contents 25 and the descriptive information 26 can be generated in real time. The distribution of the contents 25 generated in real time falls under so-called live distribution.

Alternatively, the content transmission system can include a plurality of servers 2, in which contents 25 and descriptive information 26 are supplied from different servers 2.

### [Combination Information]

The following description will detail the above-mentioned combination information with reference to Fig. 2. Fig. 2 illustrates types of combination information and specific examples thereof. (a) of Fig. 2 illustrates combination information indicating optional candidates for combination, and specific examples thereof. (b) through (d) of Fig. 2 illustrate combination information for specifying counterparts for combination, and specific examples thereof.
(a) of Fig. 2 illustrates an example of an Attribute, which is combination_optional (information on optional candidates for selection). The Attribute indicates optional candidates for combination in a form of combination_optional="(Representations of optional candidates for combination)". Note that there can be a single optional candidate for combination or a plurality of optional candidates for combination. In a case of a plurality of optional candidates for combination, a plurality of pieces of information for specifying Representations are described in a row. That is, in the example illustrated in (a) of Fig. 2, the Attribute is described in a VectorType, which can describe a list of a plurality of Representations.

In the example illustrated in (a) of Fig. 2, the Representation of id=1 (hereinafter, referred to as Representation #1, and other Representations are similarly referred to) describes combination_optional="4 5 7 8". This means that Representation #1 can be reproduced (simultaneously) in combination with at least one of Representations #4, #5, #7, and #8 (it is recommended that Representation #1 be reproduced in this combination). In this example, ids are used as information for specifying Representations. Note, however, that any information other than id can be used to specify the Representations, provided that the information can do so.

Therefore, in this example, nine types of reproduction with respect to Representation #1 are possible: only # 1; in combinations of: #1 + #4; #1 + #5; #1 + #7; #1 + #8; #1 + #4 + #7; #1 + #4 + #8; #1 + #5 + #7; and #1 + #5 + #8.

Inacceptable combinations (combinations of Representations belonging to the same group) will be excluded. In the example illustrated in (a) of Fig. 2, Representations #4 and #5 belong to the same group 2 (which corresponds to group="2", hereinafter, referred to as group 2, and other groups are similarly referred to), Representation #1 cannot be reproduced in combination with both Representations #4 and #5, even if Representation #1 describes combination_optional="4 5 7 8".

(b) of Fig. 2 illustrates an example of an Attribute, which is combination_required (information on compulsory counterparts for selection). The Attribute specifies counterparts for combination in a form of combination_required="(Representations of counterparts for combination)". Note that there can be a single counterpart for combination or a plurality of counterparts for combination. In a case of a plurality of counterparts for combination, a plurality of Representations are described in a row. That is, also the Attribute is described in a VectorType, which can describe a list of a plurality of Representations. Further, in the case of a plurality of counterparts for combination, at least one counterpart is selected from the plurality of counterparts for combination. That is, combination_required differs from combination_optional in that at least one Representation is required to be selected.

In the example illustrated in (b) of Fig. 2, Representation #1 describes combination_required="4 5 7 8". This means that Representation #1 is required to be reproduced (simultaneously) in combination with at least one of Representations #4, #5, #7, and #8.

Therefore, in this example, eight types of reproduction with respect to Representation #1 are possible: in combinations of #1 + #4; #1 + #5; #1 + #7; #1 + #8; #1 + #4 + #7; #1 + #4 + #8; #1 + #5 + #7; and #1 + #5 + #8.

(c) of Fig. 2 illustrates an example of an Attribute, which is combination_all_required (information on compulsory counterparts for selection). The Attribute specifies counterparts for combination in a form of combination_all_required="(Representations of counterparts for combination)".

Here, combination_all_required specifies a plurality of counterparts for combination, in which Representations of counterparts for combination are described in a row. That is, also the Attribute is described in a VectorType, which can describe a list of a plurality of Representations. combination_all_required is an Attribute which requires that all of the designated Representations be selected. That is, combination_all_required differs from combination_required in that all of the Representations are required to be selected.

In the example illustrated in (c) of Fig. 2, Representation #1 describes combination_all_required="4 5 7 8". This means that Representation #1 is required to be reproduced (simultaneously) in combination with all of Representations #4, #5, #7, and #8. However, since a combination of Representations belonging to the same group is inacceptable, a combination of #4 and #5, and a combination of #7 and #8 are excluded.

Therefore, in this example, four types of combination with respect to Representation #1 are possible: in combinations of #1 + #4 + #7; #1 + #4 + #8; #1 + #5 + #7; and #1 + #5 + #8.

(d) of Fig. 2 illustrates an example of an Attribute, which is combination_one_required (information on compulsory counterparts for selection). Also the Attribute specifies counterparts for combination in a form of combination_one_required="(Representations of counterparts for combination)".

This combination_one_required specifies a plurality of counterparts for combination, in which Representations of counterparts for combination are described in a row. That is, the Attribute is also described in a VectorType, which can describe a list of a plurality of Representations. A Representation including the Attribute of combination_one_required requires that one of the plurality of Representations described in the Attribute be selected.

In the example illustrated in (d) of Fig. 2, Representation #1 describes combination_one_required="4 5 7 8". This means that Representation #1 is required to be reproduced (simultaneously) in combination with any one of Representations #4, #5, #7, and #8.

Therefore, in this example, four types of reproduction with respect to Representation #1 are possible: in combinations of #1 + #4; #1 + #5; #1 + #7; and #1 + #8. It is also possible to limit the number of Representations to be combined to 2 or more. For example, it is possible to define, as an Attribute, combination_two_required which requires that two Representations be selected.

An Attribute indicated with combination_xxx, which corresponds to the combination information described above, is hereinafter referred to as an Attribute of combination or a combination Attribute. Using such an Attribute of combination makes it possible to designate how to combine contents. Let it be assumed that Representations of groups 2 and 3 can be reproduced simultaneously with a Representation of group 1, and it is desired that the Representation of group 1 is reproduced simultaneously with at least any one of the Representations of groups 2 and 3, an Attribute of combination_required can be described for the Representation of group 1, in order to designate the Representations of groups 2 and 3 as counterparts for combination.

Alternatively, in a case where it is desired that Representations of groups 1 through 3 are reproduced simultaneously, an Attribute of combination_all_required can be described for the Representation of group 1, in order to designate the Representations of groups 2 and 3 as counterparts for combination.

The following description will discuss an MPD including the above-described Attributes of combination with reference to specific examples. Of course, the MPD including Attributes of combination is not limited to the examples described below.

Note that Representations combined in a form of one to one can be multiplexed so as to be regarded as a single Representation. The present invention offers choices of combinations of contents. Therefore, the present invention is suitable for a case where an MPD describes relations of Representations combined inexactly, such as a combination of one and many, a combination of many and one, or a combination of many and many.

### [Example of MPD Including Attribute of combination_required]

First, the following description will discuss an example of an MPD including an Attribute of combination_required with reference to Fig. 3. Fig. 3 illustrates an example of an MPD including Attributes of combination_required.

In the example illustrated in Fig. 3, Representations #1 through #3 belong to group 1, and Representations #4 through #6 belong to group 2. For Representation #1, Representations #4 and #5 are designated as counterparts for combination by combination_required. Similarly, for Representation #2, Representations #5 and #6 are designated as counterparts for combination; for Representation #3, Representation #6 is designated as a counterpart for combination; for Representation #4, Representation #1 is designated as a counterpart for combination; for Representation #5, Representations #1 and #2 are designated as counterparts for combination; and for Representation #6, Representations #2 and #3 are designated as counterparts for combination.

Let it be assumed that, in such an MPD, group 1 refers to video contents (excluding audio) and group 2 refers to audio contents, the MPD can be used in order for a client 1 to select an audio content with an appropriate reproducing quality in accordance with the resolution (image quality) of a video content.

Contents to be combined with each other by Attributes of combination can be of different types such as a video content and an audio content or of same type (for example, both contents are video contents, audio contents, or character contents). In this regard, the different types of contents refer to contents which are outputted in different types. For example, video is outputted as a motion picture, audio is outputted as sound or voice, and characters are outputted as a static image. These contents are thus regarded as being different in type. The types of contents are, of course, not limited to these examples. The reproducing quality shows quality of contents when they are reproduced, such as resolution, image size, or bit rate.

Let it be considered a case in Fig. 3 where, for example, Representations #1 through #3 correspond to video contents and Representations #4 through #6 correspond to audio contents, in which a smaller id has a higher resolution and a higher reproducing quality.

In such a case, a client 1, which has referred to the MPD, can first select a Representation, which corresponds to the reproducing capability of the machine of the client 1. The client 1 can decide which Representation should be selected, with reference to other Attributes added to the respective Representations. For example, in a case where Attributes include the width and height of a content to be displayed, the client 1 can specify a Representation which corresponds to an HD (High Definition) video content, with reference to the width and height of the content.

Then, the client 1 can specify an appropriate Representation(s) to be combined with the selected Representation, with reference to the Attribute of combination (in this case, combination_required) included in the selected Representation. Subsequently, the client 1 requests the selected Representation and the specified Representation(s) from the server 2. Ultimately, the client 1 reproduces the contents sent in response to the request.

In the example illustrated in Fig. 3, combination_required of Representation #1, which is a video content with the highest resolution, specifies Representation #4, which is an audio content with the highest reproducing quality, and Representation #5, which is an audio content with a moderate reproducing quality, as counterparts for combination. That is, Representation # 1, which is a video content with the highest resolution, excludes a combination with Representation #6, which is an audio content with the lowest producing quality.

Further, combination_required of Representation #3, which is a video content with the lowest resolution, specifies only Representation #6, which is an audio content with the lowest reproducing quality, as a counterpart for combination. That is, Representation #3, which is a video content with the lowest resolution, excludes combinations with (i) Representation #4, which is an audio content with the highest reproducing quality, and (ii) Representation #5, which is an audio content with a moderate reproducing quality.

This makes it possible to prevent reproduction of contents in an unbalanced combination, such as a combination of an image with a high resolution and a voice with a low producing quality, and a combination of an image with a low resolution and a voice with a high reproducing quality. It is thus possible to ensure that contents are reproduced with a voice having a reproducing quality corresponding to that of an image. This matches with conditioning for selection of contents to be reproduced, the conditioning being based on a difference in property of reproducing devices, such as a television in living room (a high resolution and a high voice quality) and a mobile terminal (a low resolution and a low voice quality).

The client 1 can specify such appropriate combinations with reference to Attributes of combination. It is thus possible for the client 1 to select contents easily and quickly, without checking whether or not each combination of Representations included in an MPD is appropriate. Choices of selection are narrowed down by Attributes of combination. This allows the client 1 to select a combination of contents easily and quickly.

In contrast, in a case where the client selects Representations with the use of a conventional MPD which does not includes Attributes of combination, the client 1 has to check which one can be appropriately combined with each Representation. This complicates a process performed by the client 1 for selecting Representations, and may cause another problem that Representations are selected in a combination which is not intended by the content providers. Such problems will be solved by using an MPD including Attributes of combination in accordance with the present invention.

### [Example 1 of MPD Including Combination Attribute for Combining Three or More Representations]

The following description will discuss, with reference to Fig. 4, an example of an MPD including combination Attributes for combining three or more Representations. Fig. 4 illustrates an example of an MPD including combination Attributes for combining three Representations.

A case where three or more Representations are combined can be brought about when three or more groups exist. When, for example, there exist (i) a group of video contents, (ii) a group of audio contents to be reproduced simultaneously with the video content, and (iii) a group of character information contents (such as Teledex broadcasting) to be reproduced (displayed) simultaneously with either or both of the video content and the audio content, then three or more Representations are combined. The following description will exemplify a case where three Representations are combined. Note, however, that four or more Representations can be combined similarly.

In the example illustrated in Fig. 4, Representations #1 through #3 belong to group 1, Representations #4 through #6 belong to group 2, and Representations #7 through #9 belong to group 3. For Representation #1, Representations #4, #5, #7, and #8 are designated as Counterparts for combination by combination_required. Similarly, for Representation #2, Representations #5, #6, #8, and #9 are designated as Counterparts for combination; for Representation #3, Representations #6 and #9 are designated as Counterparts for combination; for Representation #4, Representation #1 is designated as a Counterpart for combination; for Representation #5, Representations #1 and #2 are designated as Counterparts for combination; for Representation #6, Representations #2 and #3 are designated as Counterparts for combination; for Representation #7, Representation #1 is designated as a Counterpart for combination; for Representation #8, Representations #1 and #2 are designated as Counterparts for combination; and for Representation #9, Representations #2 and #3 are designated as Counterparts for combination.

Such an MPD can be applicable to a case where, for example, group 1 refers to video contents, group 2 refers to audio contents, and group 3 refers to character information contents.

As described above, combination_required is an Attribute which designates that at least one of Representations of the Counterparts for combination has to be selected. Further, Representations included in the same group should not be combined with each other.

Therefore, combination_required="4 5 7 8" of Representation #1 (group 1) means that Representation #1 is to be combined with either or both of Representation #4 or #5 (group 2) or/and Representation #7 or #8 (group 3).

Specifically, Representations will be reproduced in any one of eight types of combinations: i.e., #1 + #4; #1 + #5; #1 + #7; #1 + #8; #1 + #4 + #7; #1 + #4 + #8; #1 + #5 + #7; and #1 + #5 + #8.

### [Example 2 of MPD Including Combination Attributes for Combining Three or More Representations]

The following description will discuss, with reference to Fig. 5, another example of an MPD including combination Attributes for combining three or more Representations. Fig. 5 illustrates another example of an MPD including combination Attributes for combining three Representations.
In the example illustrated in Fig. 5, as with the example illustrated in Fig. 4, Representations #1 through #3 belong to group 1, Representations #4 through #6 belong to group 2, and Representations #7 through #9 belong to group 3.

Representations #1 and #2 in Fig. 5 describe two of combination_required. More specifically, Representation # 1 describes (i) combination_required for designating #4 and #5 as the Counterparts for combination, and (ii) combination_required for designating #7 and #8 as the Counterparts for combination. Further, Representation #2 describes (i) combination_required for designating #5 and #6 as the Counterparts for combination, and (ii) combination_required for designating #8 and #9 as the Counterparts for combination.

This combination_required is an Attribute which requires that at least one of counterparts for combination be selected. Therefore, in a case where a plurality of combination_required are used, as with the example illustrated in Fig. 5, it is required that at least one of the counterparts for combination of each combination_required be selected.

Therefore, in a case where Representation #1 in Fig. 5 is selected, it is required that any one of #4 and #5 and any one of #7 and #8 be selected. In a case where Representation #2 is selected, it is required that any one of #5 and #6, and any one of #8 and #9 be selected.

In other words, the client 1, which has obtained the MPD of Fig. 5 and selected Representation #1, can reproduce contents in any one of four combinations: i.e., #1 + #4 + #7; #1 + #4 + #8; #1 + #5 + #7; and #1 + #5 + #8.

Note that combination_all_required can be used in order to designate the same combinations. That is, by using combination_all_required="4 5 7 8" for the Attribute of #1, instead of two combination_required, and combination_all_required="5 6 8 9" for the Attribute of #2, instead of two combination_required, in the example of Fig. 5, it is possible to reproduce contents in the same combination as illustrated in Fig. 5.

### [Designation 1 on Group Basis]

The foregoing description has discussed examples in which counterparts for combination are designated by ids of Representations. Note, however, that the method for specifying counterparts for combination is not limited to a specific one, provided that an MPD describes counterparts for combination so that the client 1 can specify counterparts for combination. The same applies to optional candidates for combination, which are designated by combination_optional.

For example, it can be configured that counterparts for combination (optional candidates for combination) are specified by designating groups. The following description will discuss such designation with reference to Figs. 6 and 7.

Fig. 6 illustrates an example of an MPD which designates counterparts for combination on group basis.

In the example illustrated in Fig. 6, as with the case of the example illustrated in Figs. 4 and 5, Representations #1 through #3 belong to group 1, Representations #4 through #6 belong to group 2, and Representations #7 through #9 belong to group 3.

In Fig. 6, combination_required of Representation #1 describes "4 5 group #3" as counterparts for combination. It is indicated that Representation #1 is required to be combined with at least one of Representations #4, #5, and group 3. In this example, group 3 includes Representations #7 through #9. This means that Representation #1 is required to be combined with at least one of Representations #4, #5, and #7 through #9.

Since only one Representation from one group can be selected, if Representation #1 is selected, then any one of eleven types of reproduction, which are in combinations of: #1 + #4; #1 + #5; #1 + #7; #1 + #8; #1 + #9; #1 + #4 + #7; #1 + #4 + #8; #1 + #4 + #9; #1 + #5 + #7; #1 + #5 + #8; and #1 + #5 + #9, will be possible.

Further, in Fig. 6, combination_required of Representation #9 describes "group # 1" as a counterpart for combination. It is indicated that Representation #9 is required to be combined with at least one of Representations of group 1. In this example, group 1 includes Representations #1 through #3. This means that Representation #9 is required to be combined with any one of Representations #1 through #3.

Accordingly, if Representation #9 is selected, a Representation of group 1 will surely be selected. The application of an MPD in which, for example, group 1 refers to video contents and group 3 refers to character information contents can prevent a case where video contents are not reproduced but only character information contents are reproduced.

### [Designation 2 on Group Basis]

The example illustrated in Fig. 6 has described a case where a character string, such as "group#n", is used in order to designate a specific group. However, it is also possible that identification information (id) assigned to each group is used in order to designate a group, as with the case of Representations. The following description will discuss, with reference to Fig. 7, an example in which a group is designated with the use of identification information. Fig. 7 illustrates an example of an MPD in which counterparts for combination are designated with the use of identification information of group. Note that combinations specified by the MPD of Fig. 7 are equivalent to those of Fig. 6, although ways for designating a group are different.

The example of Fig. 7 is an example in which a new Element, which is a Representation group (RepresentationGroup), is defined and Representations included in the group are described as an internal Element of the Representation group Element. Then, an Attribute indicating a group id is added to the Representation group. That is, the example illustrated in Fig. 7 indicates that Representations described between <RepresentationGroup id=" "> and </RepresentationGroup> belong to a group of an id described in <RepresentationGroup id=" ">. The combination Attribute specifies a group with the use of the id Attribute.

In other words, in the example illustrated in Fig. 7, a group whose id is g1, a group whose id is g2, and a group whose id is g3 are defined. Representations #1 through #3 belong to the group of g1, Representations #4 through #6 belong to the group of g2, and Representations #7 through #9 belong to the group of g3.

This combination_required of Representation #1 describes "4 5 g3" as counterparts for combination. It is indicated that Representation #1 is required to be combined with at least one of Representations #4, #5, and the group whose id is g3.

Further, combination_required of Representation #9 describes "g1" as a counterpart for combination. It is indicated that Representation #9 is required to be combined with at least one of Representations in the group whose id is g1.

### [Example 1 of Combination of combination_required and combination_optional]

The foregoing description has discussed the examples of MPDs which use combination_required. In an MPD, it is also possible to use combination_required and combination_optional. The following description will discuss such an MPD with reference to Fig. 8. Fig. 8 illustrates an example of an MPD including combination_required and combination_optional.

In the example illustrated in Fig. 8, Representations #1 through #3 belong to group 1, and Representations #4 through #6 belong to group 2. For Representation #1, Representations #4 and #5 are designated as optional candidates for combination by combination_optional. Similarly, for Representation #2, Representations #5 and #6 are designated as optional candidates for combination; and for Representation #3, Representation #6 is designated as an optional candidate for combination.

Meanwhile, for Representation #4, Representation #1 is designated as a counterpart for combination by combination_required. Similarly, for Representation #5, Representations #1 and #2 are designated as counterparts for combination; and for Representation #6, Representations #2 and #3 are designated as counterparts for combination.

That is, in the MPD of Fig. 8, it is recommended but not required that the Representations of group 1 are combined with the Representations of group 2. In contrast, it is required that the Representations in group 2 be combined with the Representations of group 1. In other words, each of the Representations of group 1 is allowed to be reproduced solely, whereas none of the Representations of group 2 is allowed to be reproduced solely.

Such an MPD is suitable for a case where, for example, group 1 refers to video contents (main video) and group 2 refers to sub video contents (sub/auxiliary video), such as Director's commentary PinP (Picture in Picture). For example, the MPD enables a client 1 to select (i) a sub video content whose resolution is same as that of a video content of group 1 or (ii) a sub video content whose resolution is capable of being displayed together with a video content, without being broken.

Such an MPD is also suitable for a case, for example, group 1 refers to video contents (main video) and group 2 refers to timed-texts of video contents. For example, the MPD enables the client 1 to select a timed-text with the appropriate number of characters (or fonts) in accordance with a resolution of a video content.

Let it be considered a case in Fig. 8 where, for example, Representations #1 through #3 correspond to video contents and Representations #4 through #6 correspond to timed-texts, in which a smaller id has a higher resolution (reproducing quality), and a timed-text having a number of displayed characters with a font of higher definition possesses a higher reproducing quality. Specifically, let it be assumed that Representation #4 has a number of displayed characters with a high definition font. Representation #5 has the number of displayed characters same as that of #4, with a low definition font. Representation #6 has the number of displayed characters smaller than those of #4 and #5, with a low definition font.

In such a case, a client 1, which has referred to the MPD, can first select a Representation, which corresponds to the property of the machine of the client 1, such as reproducing capability. The client 1 can decide which Representation should be selected, with reference to other Attributes added to the respective Representations.

Then, the client 1 specifies a Representation(s) which can be (or is required to be) combined with the selected Representation, with reference to the Attribute of combination included in the selected Representation. Subsequently, the client 1 requests the selected Representation and the specified Representation(s) from a server 2, and reproduces contents sent in response to the request.

In the example illustrated in Fig. 8, combination_optional of Representation #1, which is a video with the highest resolution, designates Representation #4, which is a timed-text with the highest reproducing quality, and Representation #5, which is a timed-text with a moderate reproducing quality, as counterparts for combination. That is, Representation #1, which is a video with the highest resolution, excludes a combination with Representation #6, which is a timed-text with the lowest reproducing quality.

Further, combination_optional of Representation #3, which is video with the lowest resolution, designates only Representation #6, which is a timed-text with the lowest reproducing quality, as a counterpart for combination. That is, Representation #3, which is a video with the lowest resolution, excludes combinations with (i) Representation #4, which is a timed-text with the highest reproducing quality, and (ii) Representation #5, which is a timed-text with a moderate reproducing quality.

This makes is possible to prevent reproduction of contents in an unbalanced combination, such as a combination of an image with a high resolution and a timed-text with a small number of characters of a low definition font, and a combination of an image with a low resolution and a timed-text having a large number of characters of high definition font. It is thus possible to ensure that contents are reproduced with a timed-text having a reproducing quality corresponding to that of an image. This matches with conditioning for selection of contents to be reproduced, the conditioning being based on a difference in property of reproducing devices, such as a television in living room (which has a high resolution and can display a defined timed-text) and a mobile terminal (which has a low resolution and cannot display a defined timed-text).

Since the Representations of group 1, which correspond to video contents, use combination_optional, it is also possible to reproduce each of the contents of the Representations of group 1 without a timed-text. Further, since the Representations of group 2, which correspond to timed-texts, use combination_required which designates counterparts for combination, no timed-text is solely selected and reproduced, even if a Representation of group 2 is selected before selecting a Representation of group 1. Consequently, it is possible by using the MPD of Fig. 8 to prevent only timed-text from being reproduced.

### [Example 3 of MPD Including Combination Attributes, which Combine Three or More Representations]

The following description will discuss, with reference to Fig. 9, a further example of MPD which combine three or more Representations, the MPD including combination_required and combination_optional. Fig. 9 illustrates an example of MPD which combine three or more Representations, the MPD including combination_required and combination_optional.

The MPD of Fig. 9 is equivalent to that of Fig. 4, except that Representations belonging to group 1 have combination_optional as Attributes of combination. In the example illustrated in Fig. 9, it is possible to reproduce a Representation of group 1 solely since the Representations of group 1 have combination_optional as Attributes of combination.

That is, if a client 1 selects Representation #1 from the MPD of Fig. 9, the client will then reproduce contents in any one of nine ways: only # 1; in combinations of: #1 + #4; #1 + #5; #1 + #7; #1 + #8; #1 + #4 + #7; #1 + #4 + #8; #1 + #5 + #7; and #1 + #5 + #8.

Such an MPD is suitable for a case where group 1 is a group made up of Representations of contents capable of being reproduced solely, and groups 2 and 3 are groups each of which is made up of Representations of contents which are assumed to be reproduced not solely but simultaneously with the contents of group 1. For example, such an MPD is suitable for a case where group 1 is made up of Representations of video contents including audio, group 2 is made up of Representations of sub voice contents, and group 3 is made up of Representations of timed-text contents.

### [Designation 3 on Group Basis]

Even in a case where an MPD includes combination_required and combination_optional, it is possible to designate counterparts for combination (optional candidates for combination) on group basis. The following description will discuss the designation with reference to Figs. 10 and 11.

Fig. 10 illustrates an example of an MPD which designates counterparts for combination or optional candidates for combination on group basis, the MPD including combination_required and combination_optional.

The MPD of Fig. 10 is equivalent to that of Fig. 6, except that Representations belonging to group 1 describe combination_optional as combination Attributes. In the example illustrated in Fig. 10, a Representation of group 1 can be reproduced solely, since Representations of group 1 describe combination_optional as combination Attributes.

Such an MPD is suitable for a case where group 1 refers to contents to be reproduced solely, and groups 2 and 3 are contents each of which is assumed to be reproduced not solely but simultaneously with a content of group 1, as with the case of Fig. 9.

If a client 1 selects Representation #1 from the MPD of Fig. 10, the client can then specify, as optional candidates for combination with Representation #1, Representations #4, #5, and Representations (#7 through #9) belonging to group 3. Accordingly, the client 1 can reproduce a content(s) in any one of twelve ways: only # 1; in combinations of #1 + #4; #1 + #5; #1 + #7; #1 + #8; #1 + #9; #1 + #4 + #7; #1 + #4 + #8; #1 + #4 + #9; #1 + #5 + #7; #1 + #5 + #8; and #1 + #5 + #9.

### [Designation 4 on Group Basis]

Even in a case where the MPD includes combination_required and combination_optional, it is possible to designate counterparts for combination (optional candidates for combination) with the use of group identification information. The following description will discuss, with reference to Fig. 11, an example of an MPD which designates groups with the use of group identification information, the MPD including combination_required and combination_optional. Fig. 11 illustrates an example of an MPD which designates counterparts for combination with the use of group identification information, the MPD including combination_required and combination_optional. Note that combinations designated in the MPD of Fig. 11 are equivalent to those of Fig. 10.

The MPD of Fig. 11 is equivalent to that of Fig. 7, except that the Representations belonging to group 1 describe combination_optional as combination Attributes. In the example illustrated in Fig. 11, Representation of group 1 can be reproduced solely, since Representations of group 1 describe combination_optional as combination Attributes.

Such an MPD is suitable for a case where group 1 refers to a group made up of Representations of contents capable of being reproduced solely, and groups 2 and 3 are groups of contents each of which is assumed to be reproduced not solely but simultaneously with a Representation of contents of group 1, as with the case of Fig. 10.

If a client 1 selects Representation #1 from the MPD of Fig. 11, the client can then specify, as optional candidates for combination with Representation #1, Representations #4, #5, and Representations (#7 through #9) whose ids belong to a group of g3.

### [Example 2 of Combination of combination_required and combination_optional]

The MPD including combination_required and combination_optional is suitable for the reproduction of a video content which is multi-view image coding by MVC (multiview video coding), for example. MVC is a method of a multi-view image coding, which is standardized by MPEG (Moving Picture Experts Group, official name: ISO/IEC JTC1/SC29 WG11), that is an international organization for standardization of image coding method. For example, MVC coded image data of an image from three viewpoints consisted of first through third coded image data enables (i) decoded images of the first data and the second data to be stereoscopically viewed as images of right and left eye views or (ii) decoded images of the third data and the first data to be stereoscopically viewed as images of right and left eye views. The following description will discuss an MPD suitable for MVC contents, with reference to Fig. 12. Fig. 12 illustrates an example of an MPD suitable for MVC contents.

The MPD of Fig. 12 includes three Representations, each of which includes an Attribute of mimeType, an Attribute indicating a Representation id, an Attribute indicating a group, and an Attribute of combination.

More specifically, Representation #1 includes combination_optional as an Attribute of combination, and Representations #2 and #3 include combination_required. The Attribute of mimeType describes "video/mp4; codecs=mvc1". It means that these Representations correspond to MVC contents. It is also clear from the Attribute indicating a group that the Representation in the top of Fig. 12 belongs to group 1, and other two Representations belong to group 2.

This combination_optional of Representation #1 designates Representations #2 and #3 as optional candidates for combination. That is, Representation #1 can be reproduced solely or in combination with any one of Representations #2 and #3.

Meanwhile, combination_required of each Representation #2 and #3 designates Representation #1 as a counterpart for combination. That is, Representations #2 and #3 cannot be reproduced solely but are required to be reproduced in combination with Representation #1.

The MPD is suitable for a case where, for example, group 1 is a group made up of Representations of base video contents and group 2 is a group made up of Representations of enhance video contents (enhance video). Specifically, such a case is assumed that the only Representation #1 can be viewed as a common two-dimensional image, and Representation #1 with the combination of #2 or #3 can be displayed and viewed as a stereoscopic image. For example, in the case where #1 + #2, Representation #1 is viewed as a left eye view and Representation #2 is viewed as a right eye view. And, in the case where #1 + #3, Representation #3 is viewed as a left eye view and Representation #1 is viewed as a right eye view.

If a client 1, which can display and view a stereoscopic image, obtains such an MPD, then the client 1 selects Representation #1 belonging to group 1 and specifies, from the values of combination_optional of the Representation, that Representation #2 or #3, as a stereoscopic image, is capable of being combined with Representation #1.

The client 1 selects Representation #2 or #3 specified in the above-mentioned manner and request from a server 2 a content which corresponds to Representation #1 and a content corresponding to the selected Representation (#2 or #3). And, the client 1 receives the contents sent in response to the request so as to simultaneously reproduce them. This allows the client 1 to display a stereoscopic image of a combination of #1 + #2 or a combination of # 1+ #3.

### [Example of MPD Including combination_all_required]

The following description will discuss, with reference to Fig. 13, an example of an MPD including combination_all_required. Fig. 13 illustrates an example of an MPD including combination_all_required. The MPD of Fig. 13 includes three Representations, each of which includes an Attribute of mimeType, an Attribute indicating a Representation id, an Attribute indicating a group, and an Attribute indicating bandwidth. As illustrated in Fig. 13, the three Representations (#1 through #3) belong to groups 1 through 3, respectively.

Further, Representation #2 includes combination_all_required which designates Representation #1 as a counterpart for combination, and Representation #3 includes combination_all_required which designates Representations #1 and #2 as counterparts for combination.

It is specified that Representation #2 is required to be combined with Representation #1, and Representation #3 is required to be combined with Representations #1 and #2.

That is, it is clear from the MPD that any one of reproduction, of only #1, in combinations of #1 + #2, and #1 + #2 + #3, is possible. The MPD is suitable for a case, for example, where contents which correspond to Representations of groups 1 through 3 are contents of SVC (scalable video coding). SVC is a method of a layered video coding, which is standardized by the above-mentioned MPEG. In the SVC, a three layers SVC coded image data is consisted of first through third coded image data, in which an image with a low image quality is decoded from the first image data and an image with an intermediate image quality is decoded from the first and second image data, and an image with a high image quality is decoded from the first through third image data so as to be reproduced. It is thus possible to decode and reproduce layered videos having different image qualities in accordance with the amount of data to be decoded.

In a case where such an MPD is used, the client 1 can select the desired Representation with reference to bandwidth values of respective Representations included in the groups. If the client 1 selects, from the three Representations, Representation #3 having the widest bandwidth, the client 1 then specifies, with reference to combination_all_required of Representation #3, that the content of #3 is required to be reproduced in combination with #1 and #2 (since #3 is required to be reproduced in combination with #1 and #2, the bandwidth indicated in the Representation #3 describes values including data on the bandwidths of #1 to #3).

And, the client 1 requests all of #1 through #3 from the server 2, and reproduces the contents received in response to the request. This makes it possible to reproduce contents which correspond to Representations #1 through #3 in combination (to be more accurate, the contents are to be reproduced by combining layered coding data).

Since #1 can be reproduced in combination with #2, combination_optional can be added to an Attribute of Representation #1 of the MPD of Fig. 13, so as to designate #2 as an optional candidate for combination with #1. Alternatively, #2 can be combined with #3 under the condition that the combination of #2 and #3 requires #1. Therefore, combination_optional can be added to the existing combination_all_required, which is an Attribute of Representation #2 of the MPD of Fig. 13, so as to designate #3 as an optional candidate for combination.

In Representation #2 in Fig. 13, combination_all_required designates #1. Note, however, that combination_required can be used in a case where only one Representation is to be designated.

### [Example of MPD Including Only combination_optional]

The following description will discuss an example of an MPD including only combination_optional as combination information with reference to Fig. 14. Fig. 14 illustrates an example of an MPD including only combination_optional as combination information, (a) of Fig. 14 illustrates an example of the MPD, and (b) and (c) of Fig. 14 illustrate examples of display screens on the basis of the MPD.

The MPD of (a) of Fig. 14 includes six Representations #1 through #6. Of the Representations, Representations #1 through #3 belong to group 1 and Representations #4 through #6 belong to group 2. Each of Representations #1 through #6 includes an Attribute of combination_optional. The Attributes of Representations #1 through #6 designate, as optional candidates for combination, #6, #5, #4, #3, #2, and #1, respectively.

That is, in the MPD of (a) of Fig. 14, combinations of #1 + #6; #2 + #5; and #3 + #4 are recommended. Since combination_optional does not require selection of the optional candidates for combination, each of the Representations can be reproduced solely, and combinations other than the above-described combinations can also be selected. Although combination_optional, which does not require the selection, causes the client 1 to perform an additional selection process, using combination_optional offers the client 1 with to flexible selection of a combination. Further, combination_optional narrows down choice, so that it is possible to select appropriate contents easier than a case where a conventional MPD is used.

Such an MPD is suitable for a plurality of video contents to be displayed simultaneously. For example, in a case where a video content belonging to group 1 and a video content belonging to group 2 can be simultaneously displayed on a display screen, the MPD enables the client 1 to select a video content belonging to group 2, which has a resolution which corresponds to that of a video content belonging to group 1.

Let it be considered that Representations #1 through #3 of (a) of Fig. 14 correspond to video contents and Representation #4 through #6 correspond to video contents which can be reproduced simultaneously with Representations #1 through #3, in which a smaller id has a higher resolution (reproducing quality).

In such a case, as with the example of (a) of Fig. 14, it is possible to easily select appropriate video contents having resolutions which are simultaneously displayed on a display, by specifying, as an optional candidate for combination with Representation #1 having a high resolution, Representation #6 having a low resolution. For example, in accordance with the resolutions, Representation #1 is displayed in a large scale and Representation #6 is displayed in a small scale on the display screen. In this case, since the video content corresponding to Representation #1 can be displayed with high resolution and high image quality, it is possible to enhance impression of the video content corresponding to Representation #1. Generally, a video content having high resolution has a large amount of data. The above-mentioned case brings about an effect that an average of total amount of data of the video content can easily be suppressed. The effect can be achieved by always selecting a combination of a content having high resolution and a content having low resolution. Analogously, as with the example of (a) of Fig. 14, as an optional candidate for combination with Representation #3 having low resolution, Representation #4 having a high resolution is described.

A combination of Representations both having high resolution or a combination of Representations both having low resolution can be defined as optional candidates for combination. Alternatively, a combination of Representations having the same or equivalent resolution can be defined as optional candidates for combination. In this case, it is possible to (i) select a combination of Representations capable of being transmitted in accordance with their bandwidths, and (ii) display and view an image as a whole with uniform resolution and image quality.

Examples of an aspect in which two video contents are displayed simultaneously encompass those illustrated in (b) and (c) of Fig. 14. In the examples of (b) and (c) of Fig. 14, video contents corresponding to Representation #1 are displayed in regions indicated by "#1", and video contents corresponding to Representation #6 are displayed in regions indicated by "#6". Similarly, video contents corresponding to Representations #2 through #5 are displayed in regions indicated by "#2" through "#5" in (b) and (c) of Fig. 14.

Note that, as illustrated in (b) of Fig. 14, video contents corresponding to Representations belonging to respective groups can be displayed without being overlapped. Note, further, that the arrangement of the display regions is not limited to the illustrated ones. Examples of the arrangement of the display regions therefore include one in which display regions are arranged longitudinally (in a vertical direction of the display screen) and one in which the whole display screen is divided into a plurality of regions (into four regions, for example) each of which displays a video content corresponding to a Representation belonging to each group.

A display region of a video content can have a size which conforms to its resolution. That is, in a case where video contents having different resolutions are displayed simultaneously, it is possible to display the video content having the higher resolution in a larger scale.

Furthermore, as illustrated in (c) of Fig. 14, video contents, which correspond to Representations belonging to each group, can be displayed, with being overlapped. Also in a case of (c) of Fig. 14, a display region of a video content can have a size which conforms to its resolution. Note, however, that overlap of displaying regions having the same size deteriorates visibility of the contents. It is thus preferable that display regions having the same size are displayed without being overlapped, as an example (in which #2 and #5 are displayed) illustrated in (c) of Fig. 14. Note, further, that a plurality of video contents can be displayed simultaneously in such a manner that the display regions partially overlap.

### [Process Flow]

The following description will discuss a flow of a process performed by a client 1 and a server 2, with reference to Fig. 15. Fig. 15 is a flow chart illustrating an example of the process performed by the client 1 and the server 2.

First, a descriptive information sending section 23 of the server 2 obtains an MPD (S11). Specifically, the descriptive information sending section 23 obtains, as an MPD, descriptive information 26 stored in a server storage section 21. Note that the method for obtaining an MPD is not limited to this. Examples of the method can include a method for obtaining an MPD stored in a recording medium provided external of the server 2, a method for obtaining an MPD generated by another apparatus, and a method for obtaining an MPD stored in another apparatus. Alternatively, the descriptive information sending section 23 can generate an MPD. The generation of an MPD will be described later.

The descriptive information sending section 23, which has obtained the MPD, sends the obtained MPD to the client 1 via a server communication section 22 (S12). Note that the MPD can be multicasted from the server 2 to a plurality of clients to which contents are delivered.

A content selecting section 13 of the client 1 receives the MPD via a client communication section 12 (S1), and determines whether or not selection of Representations included in the received MPD is completed (S2). In a case where the content selecting section 13 has checked whether or not Representations is to be selected with respect to all groups included in the received MPD, the content selecting section 13 determines that selection of Representations is completed, whereas in a case where there is any group for which the content selecting section 13 has not yet checked whether or not a Representation is to be selected, the content selecting section 13 determines that selection of Representations is not completed.

In a case where the content selecting section 13 determines that selection of Representations is not completed (No in S2), the content selecting section 13 selects any one of the groups for which the content selecting section 13 has not yet checked whether or not Representations is to be selected (S3). Note that a criterion for selecting any one of the groups is not particularly limited. Therefore, it is possible to select any one of the groups in the ascending or descending order of group id numbers. It is also possible to select any one of the groups, which corresponds to a predetermined type of contents (for example, a video content) first. The type of contents can be specified, for example, with the use of an Attribute of each Representation described in an MPD.

Then, the content selecting section 13 selects any one of Representations belonging to the selected group (S4). Note also that a criterion for selecting one Representation is not particularly limited. Therefore, one Representation can be selected in the ascending or descending order of Representation id numbers. Alternatively, such a Representation that satisfies a condition that the content reproducing section 15 can reproduce the Representation can be selected, with reference to an Attribute, such as resolution. The selected group is defined as a group for which checking whether or not Representations is to be selected is completed. The definition of the selected group can also be performed in S3.

Subsequently, the content selecting section 13 checks whether or not the selected Representation includes an Attribute of combination (S5). In a case where the content selecting section 13 confirms that the selected Representation includes no Attribute of combination (No in S5), the process goes back to S2.

An Attribute of combination includes (i) "combination_optional", which does not require that the selected Representation be combined with the designated Representation(s), and (ii) "combination_required", which requires that the selected Representation be combined with the designated Representation(s), as illustrated in Fig. 2.

Accordingly, in a case where the content selecting section 13 confirms that the selected Representation includes an Attribute of combination (Yes in S5), the content selecting section 13 decides, if the Attribute is combination_optional, whether or not the content selecting section 13 selects a Representation(s) from optional candidates for combination designated by the Attribute of combination (S6). In contrast, if the Attribute is an Attribute which requires selection of a Representation(s), such as combination_required, the step in S6 is not performed and the process goes to S7.

In a case where the content selecting section 13 decides not to select a Representation(s) from optional candidates for combination designated by combination_optional (No in S6), the process goes back to S2. In S6, in a case where the content selecting section 13 decides not to select all Representations belonging to a specific group from optional candidates for combination designated by combination_optional, the group is then defined as being a group for which checking whether or not Representations is to be selected is completed. This is because the check whether or not a Representation can be selected was made.

Note that it can be a user or the content selecting section 13 that decides whether or not the content selecting section 13 selects a Representation(s) from optional candidates for combination designated by combination_optional. In a case where the content selecting section 13 decides, the content selecting section 13 can be configured, for example, (i) to refer to an Attribute of the Representation, such as resolution, (ii) to check whether or not a content corresponding to a Representation can be reproduced by the content reproducing section 15, and (iii) to select the content if the content can be reproduced by the content reproducing section 15, or not to select if the content cannot be reproduced by the content reproducing section 15.

Whereas, in a case where the selecting section 13 decides to select a Representation(s) (Yes in S6) or in a case where a combination Attribute, whose existence has been confirmed in S5, is an Attribute which requires selection of a Representation(s) (such as combination_required), the content selecting section 13 selects, in accordance with the Attribute, a Representation(s) to be combined with the Representation selected in S4 (S7).

In S7, a Representation(s) belonging to a group which has not yet been selected is to be selected. On the assumption that, a Representation designated as being an optional candidate for combination by the combination Attribute, whose existence has been confirmed in S5, is defined as Representation m, and a group to which Representation m belongs is group k. If group k is a group for which checking whether or not Representations is to be selected is not completed in S4 (or S3), S6 or S7, then Representation m designated by the combination Attribute will be selected. In a case where a plurality of Representations m belonging to group k are defined as optional candidates for combination designated by the combination Attribute, any one of the plurality of Representations m will be selected. After one Representation m is selected, group k to which the Representation m belongs will be defined as a group for which checking whether or not Representations is to be selected is completed.

That is, the content selecting section 13 selects, with reference to an Attribute indicating a group id (group attribution information), a combination of Representations, i.e., a combination of a selected Representation and a Representation(s) which belong to a group(s) other than one including the selected Representation, of the Representations designated by the Attribute of combination.

Note that, in S7, a method for deciding which one of Representations designated by the Attribute of combination is to be selected is not particularly limited. It is therefore possible to select a group including a Representation to be selected in the ascending or descending order of group id numbers, and then to select any one of Representations included in the decided group in the ascending or descending order of Representation id numbers. It is also possible to select one of Representations on the basis of a reproducing quality specified with reference to Attributes of the Representations. Further, it is also possible to select one of Representations, which has been determined to be reproducible by the client 1, with reference to Attributes of the Representations.

After a Representation has been selected in S7, the process goes back to S2, and there the content selecting section 13 determines whether or not selection of Representations is completed. In a case where the content selecting section 13 determines that selection of Representations is completed (Yes in S2), the content selecting section 13 notifies a request executing section 14 of the selected Representations.

The request executing section 14, which has received the notification, generates a request corresponding to the notified Representations, and sends the request to the server 2 via the client communication section 12, so as to request from the server 2 data of the Representations selected by the content selecting section 13 (contents corresponding to the Representation) (S8).

A response executing section 24 of the server 2 receives the request (S13), reads out the requested data (contents) from a server storage section 21, and then sends the requested data to the client 1 via the server communication section 22 (S14). Contents to be sent can be obtained from the server storage section 21, another apparatus or a recording medium. Alternatively, the response executing section 24 can instruct another apparatus to send the contents to the client 1. The process in the server 2 thus ends.

The content reproducing section 15 of the client 1 receives the data (contents) requested by the request executing section 14, via the client communication section 12 (S9), and reproduces the data (contents) (S10). The process of the client 1 thus ends.

Before the content reproducing section 15 begins to reproduce the contents, the content selecting section 13 can send to the content reproducing section 15 information on combinations of Representations selected by the content selecting section 13. This enables the content reproducing section 15 to reproduce contents (Representations) in the combination as selected by the content selecting section 13.

Alternatively, the request executing section 14 can send to the content reproducing section 15 information on combinations of the requested contents. This also enables the content reproducing section 15 to reproduce contents (Representations) in the combination as selected by the content selecting section 13.

For convenience, the example illustrated in Fig. 15 shows the process in a case where the MPD includes only one Period. If the MPD includes a plurality of Periods, the illustrated process will be performed for each Period.

### [Embodiment 2]

The following description will discuss Embodiment 2 of the present invention with reference to Figs. 16 through 21. Embodiment 2 is equivalent to Embodiment 1 except that contents are selected with the use of an MPD, in which part of Attributes of combination is omitted. Configurations of a system and a device of Embodiment 2 are equivalent to those of Embodiment 1 (see Fig. 1).

### [Example 1 of MPD, in Which Part of Attributes of Combination is Omitted]

First, an example of an MPD, in which part of Attributes of combination is omitted, will be described with reference to Fig. 16. Fig. 16 illustrates an example of an MPD including combination_optional, in which Attributes of combination of group 2 are omitted.

The configuration of the MPD of Fig. 16 is equivalent to that of Fig. 8, except that none of Representations of group 2 includes an Attribute of combination. Such an MPD is applicable to a case where it is predetermined that a Representation of group 1is first selected and then a Representation of group 2 is selected.

For example, such an MPD is suitable for a case where group 1 is a group made up of Representations of video contents (main video) and group 2 is a group made up of Representations of sub video contents (sub/auxiliary video), such as Director's commentary PinP, and it is predetermined that the client 1 selects a Representation of the video content prior to a Representation of the sub video content.

### [Example 2 of MPD, in Which Part of Attributes of Combination is Omitted]

Subsequently, another example of an MPD, in which part of Attributes of combination is omitted, will be described with reference to Fig. 17. Fig. 17 illustrates another example of an MPD including combination_optional, in which Attributes of combination of group 2 are omitted.

The configuration of the MPD of Fig. 17 is equivalent to that of Fig. 12, except that none of Representations of group 2 includes an Attribute of combination. Such an MPD is also applicable to a case where it is predetermined that a Representation of group 1 is first selected and then a Representation of group 2 is selected.

For example, such an MPD is suitable for a case where group 1 is a group made up of Representations of base video contents (base video) and group 2 is a group made up of Representations of enhance video contents (enhance video), and it is predetermined that the client 1 selects a Representation of the base video content prior to a Representation of the enhance video content.

### [Example 3 of MPD, in which Part of Attributes of Combination is Omitted]

Subsequently, a further example of an MPD, in which part of Attributes of combination is omitted, will be described with reference to Fig. 18. Fig. 18 illustrates yet another example of an MPD including combination_optional, in which an Attribute of combination of group 3 is omitted.

The configuration of the MPD of Fig. 18 is equivalent to that (configuration for attaining equivalent reproduction) of Fig. 13, except that (i) the MPD describes only combination_optional and (ii) the Representation of group 3 does not include an Attribute of combination. In the example illustrated in Fig. 18, an Attribute of bandwidth is not described. Note, however, that the Attribute of bandwidth can be described. Such an MPD is also applicable to a case where it is predetermined that a Representation of group 1 is first selected and then Representations of groups 2 and 3 are selected.

For example, such an MPD is suitable for a case where groups 1 through 3 is groups made up of Representations of SVC (scalable video coding) contents, and it is predetermined that the client 1 selects the contents in the order of groups 1, 2, and 3.

In the MPD of Fig. 18, combination_optional of Representation #1 indicates that Representation #1 can be combined with Representation #2. Accordingly, the client 1 can select at this moment (i) only #1 or (ii) #1 + #2. In a case where #1 + #2 is selected, combination_optional of Representation #2 indicates that Representation #2 can further be combined with Representation #3. Therefore, the client 1 can select at this moment (i) #1 + #2 or (ii) #1 + #2 + #3. In this way, the client 1 selects any one of solely #1, combinations of #1 + #2, and #1 + #2 + #3.

### [Example 4 of MPD, in which Part of Attributes of Combination is Omitted]

Subsequently, a yet further example of an MPD, in which part of Attributes of combination is omitted, will be described with reference to Fig. 19. Fig. 19 illustrates an example of an MPD including combination_required, in which Attributes of combination of group 1 are omitted.

The configuration of the MPD of Fig. 19 is equivalent to that of Fig. 3, except that Representations of group 1 do not include Attributes of combination. Such an MPD is applicable to a case where it is predetermined that a Representation of group 2 is first selected and then a Representation of group 1 is selected.

The MPD of Fig. 19 includes combination_required, all of which designate that the Representation of group 2 is required to be combined with the Representation of group 1. This makes it possible for the client 1 to easily understand that the Representations of group 2 correspond to contents which cannot be reproduced solely.

Such an MPD is suitable for a case where, for example, contents which correspond to the Representations of group 1 are main video contents and contents which correspond to the Representations of group 2 are sub video contents, and it is predetermined that the client 1 first selects a content which corresponds to the Representation of group 2.

### [Example 5 of MPD, in which Part of Attributes of Combination is Omitted]

Subsequently, a yet further example of an MPD, in which part of Attributes of combination is omitted, will be described with reference to Fig. 20. Fig. 20 illustrates another example of an MPD including combination_required, in which an Attribute of combination of group 1 is omitted.

The configuration of the MPD of Fig. 20 is equivalent to that of Fig. 12, except that a Representation of group 1 does not include an Attribute of combination. Such an MPD is applicable to a case where it is predetermined that a Representation of group 2 is first selected and then a Representation of group 1 is selected.

The MPD of Fig. 20 includes combination_required, both of which designate that the Representation of group 2 is required to be combined with the Representation of group 1. This makes it possible for the client 1 to easily understand that the Representations of group 2 correspond to contents which cannot be reproduced solely.

Such an MPD is suitable for a case where, for example, contents which correspond to the Representations of groups 1 and 2 are MVC (multiview video coding) contents, and it is predetermined that the client 1 first selects a content which corresponds to the Representation of group 2.

### [Process Flow with the Use of MPD in which Attribute of Combination is Omitted]

The following description will discuss, with reference to Fig. 21, a flow of a process performed when the client 1 uses an MPD, in which part of Attributes of combination is omitted. Fig. 21 is a flow chart illustrating an example of a process performed when the client 1 uses an MPD, in which part of Attributes of combination is omitted. Note that a process performed by the server 2 is equivalent to that of Fig. 15, and therefore its description is omitted. Further, steps of S21 through S30 of the flow chart of Fig. 21 are substantially equivalent to the steps of S1 through S10 of Fig. 15 and therefore only difference between the steps of Fig. 21 and the steps of Fig. 15 will mainly be described.

A content selecting section 13 of the client 1 receives an MPD via a client communication section 12 (S21), and determines whether or not selection of Representations included in the received MPD is completed (S22).

In a case where the content selecting section 13 determines that selection of Representations is not completed (No in S22), the content selecting section 13 selects any one of the groups for which the content selecting section 13 has not yet checked whether or not Representations can be selected (S23).

Note that a criterion for selecting any one of the groups is not particularly limited. Here, however, a group which includes a Representation having a combination Attribute is selected first. For example, in a case where a group with the small group id number includes a Representation having a combination Attribute, any one of the groups is selected in the ascending order of the group id numbers. Alternatively, in a case where a group with the large group id number includes a Representation having a combination Attribute, any one of the groups is selected in the descending order of the group id numbers. It is also possible to select any one of group, which corresponds to a predetermined type of content first. As has been described in the present Embodiment 2, it is also possible to select any one of contents in a predetermined order, such that a main video content is selected first. The type of contents can be specified by other Attributes and the like added to Representations.

In addition to making a rule for a selection order in advance, it is possible to specify a selection order by describing Attributes, which indicates priority of selection (priority Attributes). It is also possible to select, upon checking whether or not the obtained MPD includes a Representation to which an Attribute of combination is added, a group including the Representation to which an Attribute of combination is added.

Subsequently, the content selecting section 13 selects any one of Representations belonging to the selected group (S24). Subsequently, the content selecting section 13 checks whether or not the selected Representation includes an Attribute of combination (S25). In a case where the content selecting section 13 confirms that the selected Representation includes no Attribute of combination (No in S25), the process goes back to S22.

Whereas, in a case where the content selecting section 13 confirms that the selected Representation includes an Attribute of combination (Yes in S25), the content selecting section 13 decides, if the Attribute is combination_optional, whether or not the content selecting section 13 selects a Representation(s) from optional candidates for combination designated by the Attribute of combination (S26). In contrast, if the Attribute is an Attribute which requires selection of a Representation(s), such as combination_required, the step in S26 is not performed and the process goes to S27.

In a case where the content selecting section 13 decides not to select a Representation(s) from optional candidates for combination designated by combination_optional (No in S26), the process goes back to S22. Whereas, in a case where the content selecting section 13 decides to select a Representation(s) (Yes in S26) or in a case where an Attribute, whose existence has been confirmed in S25, is an Attribute which requires selection of a Representation(s), the content selecting section 13 selects, in accordance with the Attribute, a Representation(s) to be combined with the Representation selected in S24 (S27).

After a Representation(s) has been selected in S27, the process goes back to S25, and the content selecting section 13 further checks whether or not the Representation selected in S27 includes an Attribute of combination.

That is, Embodiment 2 differs from the example of Fig. 15 in that, in a case where a Representation is selected, the content selecting section 13 checks whether or not the Representation includes an Attribute of combination. As such, when an MPD is used, in which part of Attributes of combination is omitted, it is possible to infer a Representation(s), which is a counterpart(s) for combination (an optional candidate(s) for combination), from an Attribute of the selected Representation. Note that, even in a case where no Attribute of combination is omitted, a process of Fig. 21 is used so as to select a Representation(s).

In a case where, in S25, the content selecting section 13 confirms that the selected Representation includes no Attribute of combination, the process goes back to S22.

In a case where, in S22, the content selecting section 13 determines that selection of Representations is completed (Yes in S22), the content selecting section 13 notifies a request executing section 14 of the selected Representations. The request executing section 14, which has received the notification, requests data of the notified Representation from the server 2 (S28).

Subsequently, the content reproducing section 15 of the client 1 receives the data (contents) requested by the request executing section 14 via the client communication section 12 (S29) and reproduces it (S30). The process of the client 1 thus ends.

For convenience, the example illustrated in Fig. 21 shows the process in a case where the MPD includes only one Period. If the MPD includes a plurality of Periods, the illustrated process will be performed for each Period.

### [Embodiment 3]

Embodiments 1 and 2 have described examples in which an Attribute indicating combination of Representations, that is an Attribute of combination, is used. Note that combination of Representations can be described with other formats other than Attributes. The following description will discuss examples in which combination of Representations is described with Elements with reference to Figs. 22 and 23. Note that a system and a device of Embodiment 3 are equivalent to those of Embodiment 1 (see Fig. 1).

Fig. 22 illustrates an example of an MPD describes combinations of Representations with Elements. In the example illustrated in Fig. 22, a Period which begins with "PTOS" includes Representation #1 which belongs to group 1, and Representation #4 which belongs to group 2.

In Representation #1, an Element (combination Element) which begins with <combination> and ends with </combination> is described, the Element indicating a Representation which is an option to be combined with Representation #1. The Element includes another Element (Representation id Element), which begins with <representation_id> and ends with </representation_id>, the Element specifying an id of a Representation to be combined with Representation #1. The Element (combination Element) is an Element which corresponds to combination_optional in Embodiments 1 and 2.

In Representation #4, an Element (combination Element) which begins with <combination relation="required"> and ends with </combination> is described, the Element indicating a Representation to be combined with Representation #4. The Element (combination Element) is an Element which corresponds to combination_required in Embodiments 1 and 2.

That is, the Element indicates that, in a case where Representation #4 is selected, it is required that at least one Representation be selected from Representations, which are counterparts for combination designated by the Element. In this way, it is also possible to designate a type of combination in a form of relation="(type of combination)".

The Element of Representation #4 includes another Element (Representation id Element), which begins with <representation_id> and ends with</representation_id>, as with Representation #1. The Element (Representation id Element) specifies an id of a Representation to be combined with Representation #4. That is, in this example, it is required that Representation #4 be combined with Representation #1.

Note that, even in a case where the MPD including such Elements is used, a flow of process performed by the client 1 and the server 2 is equivalent to that of Fig. 15 or 21.

A schema of such Elements is shown, for example, in Fig. 23. Fig. 23 illustrates an example of a schema of a combination Element, which describes combination information on Representations.

The schema of Fig. 23 defines an Element "combination", whose type is "combinationType". The "combinationType" is defined as being of a type consisting of (i) one or more "representation_id" Element, whose type is "integerType", and (ii) a "relation" Attribute, whose type is "relationType" and whose default is "optional". The "relationType" is a type which can have three values of character strings, i.e., "optional", "required", and "all_required".

Similarly, another string, such as "one_required", can be defined.

In other words, the Element "combination" has a structure defined with "combinationType", the "combinationType" defining that "representation_id" can be designated with a plurality of integers sequentially (see the description from <sequence> to </sequence>). The "combinationType" also defines that the "relation" Attribute can designate "relationType", and that the "relationType" has a default of "optional".

That is, in Representation #1 of the MPD of Fig. 22, in which no "relation" is described, "relationType" is deemed to be "optional". Whereas, in Representation #4, "relation" Attribute, which designates "required", is described after "combination".

### [Embodiment 4]

The following description will discuss Embodiment 4 of the present invention with reference to Figs. 26 and 27. Fig. 26 illustrates an example of an MPD in which combination of Representations are described with Elements, and Fig. 27 illustrates an example of a schema of the Element, as with Embodiment 3 (see Figs. 22 and 23). Embodiment 4 and Embodiment 3 have in common that they use a form of a combination Element. However, Embodiment 4 differs from Embodiment 3 in definition of "relationType", which is a type of a "relation" Attribute. A system and a device of Embodiment 4 are equivalent to those of Embodiment 1 (see Fig. 1).

In Embodiment 3, the combination Element has indicated the dependency relation between the Representation to which the combination Element is added and the Representation indicated by "representation_id" Element in the combination Element, with the use of the "relation" Attribute of "relationType". For convenience, a Representation to which the combination Element is added is hereinafter referred to as "Representation A", and a Representation indicated by "representation_id" Element in the combination Element is hereinafter referred to as "Representation B".

That is, "relation="required"" indicates that reproduction of Representation A requires reproduction of Representation B. In a case of "relation="optional"", it will be indicated that, when Representation A is reproduced, Representation B will be an optional candidate (not a required counterpart) to be reproduced simultaneously.

Let it be considered a case where a "relation" Attribute added to Representation A is "relation="optional"". In this case, if "relation="required"" is added to Representation B indicated with the "representation_id" Element, and the "representation_id" Element designates Representation A, then Representation A will be a counterpart for combination with respect to Representation B, and Representation B is an optional candidate for combination with respect to Representation A. That is, Representation B has a dependency relation with respect to Representation A (Representation A can be reproduced solely, whereas Representation B cannot be reproduced without Representation A).

Embodiment 4 describes another method for indicating such a dependency relation of Representations with the use of a "relation" Attribute, whose type is "relationType". As indicated by the definition of "relationType" in Fig. 27, the "relation" Attribute indicating the dependency relation of Representations in Embodiment 4 is an Attribute, which indicates whether a Representation, to which the combination Element is added, is a main content ("main"), a sub content ("sub") or an auxiliary content ("auxiliary"), with respect to a Representation to be reproduced in a combination indicated by the "representation_id". That is, "relation" can have any one of values: "main", "sub" and "auxiliary". A default value of a "relation" Attribute is "main". If there is no "relation" Attribute, it can be construed that a "relation" Attribute is "main".

In this regard, the main content ("main") refers to a content which is always reproduced and a content capable of being reproduced solely. That is, a content which has a "relation" Attribute of "main" is a content required to be selected.

The sub content ("sub") refers to a content to be reproduced only when its reproduction is instructed, differently from the main content which is always reproduced. That is, a content which has a "relation" Attribute of "sub" is a content which is an optional candidate for combination.

The auxiliary content ("auxiliary") refers to a content which (i) is reproduced in combination with a main (or sub) content only when the reproduction of the auxiliary content is instructed, and (ii) cannot be reproduced solely. That is, a content which has a "relation" Attribute of "auxiliary" is a content which cannot be selected solely.

In Embodiments 1 through 3, no distinction between a sub content ("sub") and an auxiliary content ("auxiliary") is made, both of which contents are regarded as being to be reproduced in combination with a main content. In contrast, in Embodiment 4, a content which is forbidden to be reproduced solely is distinguished as an auxiliary content. In a case where no "main" content exists, the "sub" content can be reproduced solely but the "auxiliary" content cannot be reproduced solely.

In Embodiment 3, as described above, a dependency relation between Representations is directly designated by "relation", which indicates whether a Representation is a required counterpart or an optional candidate to be reproduced in combination with the designated Representation. In contrast, in Embodiment 4, a dependency relation between Representations is indirectly designated by "relation", which indicates functions of a Representation, such as "main" or "sub". Both Embodiments have in common that they indicate a dependency relation between Representations.

With respect to Representation #1 (group 1) in Fig. 26, a combination Element designates Representation #4 (group 2). Since a "relation" Attribute is not described in the combination Element, it is clear that Representation #1 is a content of "main", which is a default attribution. That is, Representation #1will be reproduced always.

In contrast, with respect to Representation #4 in Fig. 26, a combination Element designates Representation #1 and describes "relation="sub". It is thus clear that Representation #4 is a sub content. That is, Representation #4 will only be reproduced when its reproduction is instructed, while Representation #1 is being reproduced.

As such, the combination Element of Embodiment 4 includes a "relation" Attribute, which indirectly indicates a dependency relation between Representations while indicating functions of the Representations. Embodiment 4 thus makes it possible to reproduce contents in an appropriate combination.

Since the combination Element of Embodiment 4 indicates a function of a Representation to which the combination Element is added, "representation_id" can be omitted in a case where a Period includes the limited number of Representations and a combination of Representations to be reproduced is obvious.

That is, the "relation" Attribute can be used as combination information indicating combinations of contents. The client 1 (content selecting section 13) selects contents in accordance with the combination information. For example, if the obtained MPD includes a content of "relation=main", the client 1 will then select the content, and if the obtained MPD further includes a content of "relation=sub" or "relation=auxiliary", the client 1 will decide whether or not the content should be selected by, for example asking a user. Also with the use of such a configuration, which can narrow down choice of contents, the client 1 can easily select an appropriate content.

### [Contents To Be Combined To Each Other]

Embodiments 1 through 4 have described examples, in which combinations, such as a combination of a video content and an audio content, a combination of a video content (main) and a video content (sub), and a combination of a video content and a timed-text (timed_text), are described with the use of Attributes or Elements. However, contents to be combined with each other are not limited to such examples, provided that the contents are simultaneously reproducible or usable. For example, an UGC (User Generated Content) can be combined with a video content or a content other than one described above. The combination information in accordance with the present invention is also applicable to these combinations.

Embodiments 1 through 4 have described examples, in which, on the basis of a Representation, a combination of Representations or a combination of a Representation and a group are described with the use of Attributes or Elements added to the basic Representation. Note that description of information on combinations of groups also allows the client 1 to easily select contents to be combined with each other.

Fig. 28 illustrates an example of an MPD in which combination Attributes are added to groups. In the example of Fig. 28, "combination_optional="g2"" is added to RepresentationGroup of "g1". This indicates that Representations #1, #2, and #3, which belong to the RepresentationGroup of "g1", can be reproduced independently or in combination with any one of Representations #4, #5, and #6, which belong to RepresentationGroup of "g2".

"combination_required="g1"" is added to the RepresentationGroup of "g2". This indicates that Representations #4, #5, and #6, which belong to the RepresentationGroup of "g2", cannot be reproduced independently and are required to be reproduced in combination with any one of Representations #1, #2, and #3, which belong to the RepresentationGroup of "g1". In this way, a combination Attribute added to a group will serve as group designating information for designating a group to be combined with the group to which the combination Attribute is added.

As described above, combination Attributes or combination Elements of the present invention have an required feature that they are combination information indicating whether contents are counterparts for combination or optional candidates for combination. Combination Attributes or combination Elements of the present invention are applicable to both a Representation as a single content or a group (RepresentationGroup) as a collection of contents.

Embodiments 1 through 4 have described Representations to be combined with the use of their ids. However, a method for indicating Representation to be combined is not limited to this. Examples of the method include a method for (i) assigning a specific id (a combination identifier or a combination id) to a combination itself, without directly designating Representation ids of Representations to be combined with each other and (ii) describing the combination id in combination Attributes (or Elements) in each of the Representations. In this case, the client 1 can specify Representations having a same combination id as contents to be combined.

The following description will discuss in this regard with reference to Figs. 29 and 30. Fig. 29 illustrates an example for specifying counterparts for combination with the use of combination ids. Specifically, (a) of Fig. 29 illustrates an example of an MPD for specifying counterparts for combination without using combination ids, and (b) of Fig. 29 illustrates an example of an MPD for specifying the counterparts for combination, which are identical to those in (a) of Fig. 29, with the use of combination ids. Fig. 30 illustrates another example for specifying counterparts for combination with the use of combination ids. Specifically, (a) of Fig. 30 illustrates an example of an MPD for specifying counterparts for combination without using combination ids, and (b) Fig. 30 illustrates an example of an MPD for specifying the counterparts for combination, which are identical to those in (a) of Fig. 30, with the use of combination ids. In Figs. 29 and 30, the combination id is defined as "Cn" (where n is a positive integer).

Fig. 29 illustrates a description example, which indicates that any one of two types of reproductions: #1 + #4; and #1 + #7 is required. In (b) of Fig. 29, combination ids of "C1" are assigned and described to Representations #1 and #4, and combination ids of "C2" are assigned and described to Representations #1 and #7. This means that respective combinations of #1 + #4, and #1 + #7 are required.

In a case where the content selecting section 13 of the client 1 selects contents with the use of the MPD, the content selecting section 13 surely selects any one of combinations of C 1 and C2, in accordance with a combination Attribute (one_required). In a case where the content selecting section 13 selects C1, the content selecting section 13 selects Representation #4 associated with the same combination id (C1), whereas in a case where the content selecting section 13 selects C2, the content selecting section 13 selects Representation #7 associated with the same combination id (C2).

Fig. 30 illustrates a description example, which indicates that reproduction of a combination of #1 + #4 + #7 is required. In (b) of Fig. 30, combination ids of "C1" are assigned and described to Representations #1, #4 and #7. This means that the combination of #1 + #4 + #7 is required.

In a case where the content selecting section 13 of the client 1 selects contents with the use of the MPD, the content selecting section 13 surely selects and reproduces the combination of C1, in accordance with a combination Attribute (required). That is, the content selecting section 13 selects all of Representations #1, #4, and #7, associated with the same combination id (C1).

As illustrated in Figs. 29 and 30, in the method for assigning a specific id to a combination itself so as to specify Representations having a same id as Representations to be combined with each other, it is not necessary to describe each Representation to be combined with an id. Therefore, the method can simplify the description. In addition, the method has another feature that an edit is easy in a case where a new Representation is added to an existing combination.

### [Generation Of MPD By The Server 2]

As described above, an MPD, which has been generated previously, can be read out for use. Alternatively, the descriptive information sending section 23 of the server 2 can generate an MPD. The following description will discuss a process for generating an MPD by the descriptive information sending section 23.

First, the descriptive information sending section 23 decides a combination of contents to be simultaneously reproduced, with reference to combination condition information indicating combination conditions of the contents. Then, the descriptive information sending section 23 generates an MPD including an Attribute of combination, which indicates the decided combination. Note that, when generating an MPD, the Attribute of combination can be added to an existing MPD (an MPD, which does not include an Attribute of combination).

The combination condition information is not limited to a specific one, provided that the combination condition information indicates combination conditions of contents. Examples of the combination condition information include the following information.

That is, in a case where contents to be combined are a video content and an audio content, the combination condition information can be information indicating combinations of admissible reproducing qualities, which have been set previously.

If such combination condition information is used, the descriptive information sending section 23 will then generate an Attribute of combination for combining a video content having a specific reproducing quality and an audio content having a reproducing quality which should be combined with the specific reproducing quality of the video content, the audio content being specified by the combination condition information.

Whether the combination is defined as being required or not (whether Attributes of combination, such as combination_required, is used or combination_optional is used) can be decided in accordance with the use of attributions of contents (it is possible to specify it with reference to Attributes or the like). For example, in a case where a combination of contents undesired to be reproduced solely is specified by Attributes, it is possible to define the combination as being required, examples of the combination including a combination of (a) a video content without voice and (b) an audio content. In contrast, in a case of a combination of contents which can be reproduced solely, combination_optional can be used. It is because the contents are not required to be combined.

An MPD which designates the combination of the video content and the audio content is generated by describing the Attribute as an Attribute of at least one of the Representations in the MPD which correspond to the video content and the audio content.

Note that the information indicating combinations of admissible reproducing qualities refers to information in which information on reproducing quality of the video content or a scope thereof is associated with information on reproducing quality of the audio content and a scope thereof.

Examples of the information indicating combinations of admissible reproducing qualities include information in which information on a scope of bit rate of the video content is associated with information on a scope of bit rate of the audio content to be reproduced simultaneously with the video content.

With reference to such information, the descriptive information sending section 23 specifies, from a bit rate of a video content or an audio content to be combined, a scope of a bit rate of a video content or an audio content to be combined with the former content.

Then, the descriptive information sending section 23 describes a Representation of the video content or the audio content, which has the specified scope of bit rate, in a Representation of combination, which corresponds to a video content or an audio content to be combined, so as to generate an MPD.

In a case where contents to be combined are a video content and a timed-text, the combination condition information can be information in which information on a predetermined display size of the video content is associated with information on a display aspect of the timed-text.

In a case where such combination condition information is used, the descriptive information sending section 23 will specify, from the combination condition information, (i) a display size of the video content with reference to an Attribute of the video content, and (ii) a display aspect of the timed-text, the display aspect corresponding to the display size. The descriptive information sending section 23 generates an Attribute of combination for combining the timed-text having the specified display aspect and the video content, so as to generate an MPD including the Attribute.

The combination condition information can be information in which, for example, information on a display size of the video content or a scope thereof is associated with information on a font and the number of characters to be displayed in one screen, of the timed-text. In this case, the font and the number of characters are defined such that, if they are within a scope of the display size or the scope thereof, each character can be read without difficulty.

The descriptive information sending section 23 specifies, with reference to such information, i.e., the display size of the video content, a font and the number of characters to be displayed, of the timed-text to be combined with the video content.

Then, the descriptive information sending section 23 describes a Representation of the timed-text having the specified font and the number of characters to be displayed with the use of a combination Attribute, in a Representation of combination, which corresponds to the video content, so as to generate an MPD in which the video content and the timed-text suitable for the video content are associated with each other.

In a case where contents to be combined are a main video content and a sub video content (such as a content of PinP), the combination condition information can be information in which information on a predetermined display size of the main video content or a scope thereof is associated with information on a display size of a sub video content which can be displayed with being overlapped with the main video content having the predetermined display size or a scope thereof.

In a case where such combination condition information is used, the descriptive information sending section 23 will specify, from the combination condition information, (i) a display size of the main video content with reference to an Attribute of the main video content, and (ii) a display size corresponding to the display size or a scope thereof. Then, the descriptive information sending section 23 generates an Attribute of combination for combining the sub video content having the specified display size or the scope thereof and the main video content, so as to generate an MPD including the Attribute.

If a transmission band has an upper limit during receiving distribution of contents (downloading contents from the server 2), then the combination condition information can be information indicating the upper limit of the transmission band.

In this case, the descriptive information sending section 23 generates an Attribute of combination for combining contents within a scope, which does not exceed the upper limit indicated by the combination condition information, so as to generate an MPD including the Attribute.

For example, the descriptive information sending section 23 can set transmission bandwidths which can be assumed previously, and extracts, for each bandwidth thus set, combinations of contents capable of being transmitted through the bandwidth, such as a combination of video contents, a combination of a video content and an audio content, and a combination of other contents, with the use of bit rate information. Ultimately, the descriptive information sending section 23 can generate an MPD on the basis of the extracted combinations. This prevents a bit rate of a content to be downloaded from exceeding the previously set bandwidth. It is thus possible to download contents stably.

The above description has described an example for generating (describing) an Attribute of combination, as information indicating combinations of contents. Note, however, that the descriptive information sending section 23 can generate, as the information indicating combinations of contents, information described with Elements as illustrated in Fig. 22. The present invention encompasses a method for generating combination information or descriptive information (such as an MPD) including the combination information.

A component for generating such information is not limited to the server 2. Therefore, a device other than the server 2 can generate such information. In such a case, the information generated by the device can be sent to the client 1 via the server 2 or directly from the device. Alternatively, the client 1 can be provided with a recording medium in which the information generated by the device is stored, so as to read out the information from the recording medium.

### [Data Structure of Combination Information and Recording Medium in Which the Combination Information is Stored]

The present invention encompasses a data structure of descriptive information, which includes combination information indicating combinations of contents to be reproduced simultaneously, such as Attributes of combination or Elements, as described in Embodiments 1 through 4.

The present invention also encompasses a recording medium in which the combination information indicating combinations of contents to be reproduced simultaneously, such as Attributes of combination or Elements, is stored. Examples of the recording medium include (i) a tape such as an electromagnetic tape or a tape cassette, (ii) a disc including a magnetic disc such as Floppy (Registered Trademark) disc/a hard disc and an optical disk such as CD-ROM/MO/MD/DVD/BD/CD-R, (iii) a card such as IC card (including a memory card)/an optical card, (iv) a semiconductor memory such as a mask ROM/EPROM/EEPROM/Flash ROM, or (v) a logic circuit such as a PLD (Programmable logic device) and an FPGA (Field Programmable Gate Array). The recording medium is not necessarily described as an MPD, provided that the recording medium includes the combination information.

### [Regarding Combination of Embodiments]

The present invention is not limited to the above-described embodiments, and various modifications are possible within a scope defined by the Claims. The technical scope of the present invention encompasses embodiments obtained by appropriately combining the technical means disclosed in different embodiments.

### [Examples of Configuration by Software]

Blocks of the client 1 and the server 2, in particular, the client control section 10 and the server control section 20 can be realized by hardware, such as a logic circuit formed on an integrated circuit (IC chip) or software, such as a CPU (Central Processing Unit).

In the latter case, each of the client 1 and the server 2 includes components, such as (i) a CPU for implementing instructions of a program which achieves the functions of the client 1 and the server 2; (ii) an ROM (Read Only Memory) for storing the program; (iii) an RAM (Random Access Memory) for developing the program; and (iv) a storage device (recording medium) for storing the program and various data, such as a memory. The object of the present invention can be attained by providing the client 1 and the server 2 with a computer-readable recording medium in which a program code of a control program (an executable program, an intermediate code program, a source program) of the client 1 and the server 2 is stored, the control program being a software for achieving the above-described functions. This allows the computer (or a CPU/MPU) to read out and implement the program code stored in the recording medium.

Examples of the recording medium include (i) a tape such as an electromagnetic tape or a tape cassette, (ii) a disc including a magnetic disc such as Floppy (Registered Trademark) disc/a hard disc and an optical disk such as CD-ROM/MO/MD/DVD/BD/CD-R, (iii) a card such as IC card (including a memory card)/an optical card, (iv) a semiconductor memory such as a mask ROM/EPROM/EEPROM/Flash ROM, or (v) a logic circuit such as a PLD (Programmable logic device) and an FPGA (Field Programmable Gate Array).

Alternatively, the client 1 and the server 2 can be configured to be connectable to a communication network, so that the program code can be provided via the communication network. Note that the communication network is not limited to a specific type, provided that it can transmit a program code. Examples of the communication network include an internet, an intranet, an extra net, LAN, ISDN, VAN, a CATV communication network, a Virtual Private Network, a telephone line, a cellular communication network, or a satellite communication network. Note, further, that a transmission medium constituting the communication network is not limited to a specified construction or type, provided that it can transmit a program code. Examples of the transmission medium include (i) a wired line, such as IEEE1394, USB, a power-line carrier, a cable television line, a telephone line, and an ADSL (Asymmetric Digital Subscriber Line) line, and (ii) a wireless line, such as infrared ray, e.g., IrDA or remote control, Bluetooth (Registered Trademark), IEEE802.11 wireless, HDR (High Data Rate), NFC (Near Field Communication), DLNA (Digital Living Network Alliance), a cellular telephone network, a satellite connection, and a terrestrial digital network. The present invention can be realized in a form in which the program code is computerized data signals included in carrier waves, which computerized data signals are embodied by an electronic transmission.

### [Preferred Forms of the Present Invention]

As described above, a reproducing device in accordance with the present invention is a reproducing device which (i) selects contents with reference to selection content information including at least information on contents which are available from a server at request, (ii) requests the server to send the selected contents, and (iii) reproduces the contents sent in response to the request, the reproducing device comprising: selecting means for selecting, from the contents available from the server at request, a combination of contents with reference to combination information included in the selection content information, the combination information indicating combinations of contents to be reproduced simultaneously; requesting means for requesting the server to send the contents selected by the selecting means; and reproducing means for reproducing the contents sent from the server in response to the request of the requesting means, in the combination selected by the selecting means.

As described above, a method for controlling a reproducing device in accordance with the present invention is a method for controlling a reproducing device which (i) selects contents with reference to selection content information including at least information on contents which are available from a server at request, (ii) requests the server to send the selected contents, and (iii) reproduces the contents sent in response to the request, the method comprising the steps of: selecting, from the contents available from the server at request, a combination of contents with reference to combination information included in the selection content information, the combination information indicating combinations of contents to be reproduced simultaneously; requesting the server to send the contents selected in the selecting step; and reproducing the contents sent from the server in response to the request in the requesting step, in the combination selected in the selecting step.

According to the configuration, the selection content information, which includes at least information on contents available from the server at request, further includes combination information indicating combinations of contents to be reproduced simultaneously. Contents are selected in accordance with the combination information. The selected contents are requested to be sent, and the contents sent in response to the request are reproduced in the selected combination.

According to the configuration, the reproducing device can simultaneously reproduce contents in the combination indicated by the combination information. That is, the reproducing device can easily select contents in an appropriate combination by deciding contents with reference to the combination information, without checking appropriateness of all possible combinations of contents.

Further, in the selection content information, contents are associated with the combination information, at least one piece of the combination information included in the selection content information being information on compulsory counterparts for selection, which indicates contents required to be reproduced simultaneously. In a case where a selected content is associated with the information on compulsory counterparts for selection, it is preferable that the selecting means also selects a content(s) from among contents indicated by the information on compulsory counterparts for selection.

According to the configuration, in a case where the selected content is associated with the information on compulsory counterparts for selection, a content indicated by the information on compulsory counterparts for selection will also be selected. That is, a content associated with the information on compulsory counterparts for selection is selected not solely but in combination with another content indicated by the information on compulsory counterparts for selection.

Therefore, by associating a content, which is not desired to be selected solely, with the information on compulsory counterparts for selection, it is possible to prevent the content from being reproduced solely. This allows reproduction of contents in an appropriate combination.

Note that there can be a single content indicated by the information on compulsory counterparts for selection or a plurality of the contents. In a case where a plurality of contents indicated by the information on compulsory counterparts for selection, it can be defined that the predetermined number of contents of the plurality of contents is required to be selected. Alternatively, it can be defined that all selectable contents are required to be selected.

Further, in the selection content information, contents are associated with the combination information, at least one piece of the combination information included in the selection content information being information on optional candidates for selection, which indicates optional candidates of contents to be reproduced simultaneously. In a case where a selected content is associated with the information on optional candidates for selection, it is preferable that the selecting means optionally selects a content(s) from among contents indicated by the information on optional candidates for selection.

According to the configuration, in a case where a selected content is associated with the information on optional candidates for selection, another content indicated by the information on optional candidates for selection will be an optional candidate for selection. That is, a content associated with the information on optional candidates for selection can be selected solely or in combination with another content indicated by the information on optional candidates for selection.

Therefore, by associating a content, which can be selected solely or in combination with another content, with the information on optional candidates for selection, it is possible to reproduce the content solely or in combination with an appropriate content.

Furthermore, the reproducing device includes a communication section for receiving the selection content information from an external device, wherein: the selecting means preferably selects contents with the use of the selection content information received via the communication section.

According to the configuration, contents are selected with the use of the selection content information received by the reproducing device via the communication section. Sending the selection content information to the reproducing device thus enables the reproducing device to reproduce the contents on the basis of the selection content information thus sent.

The external device can be the server or another device. Further, the selection content information can be generated by the server or another device.

Further, in the selection content information, part of the contents available from the server at request is associated with the combination information. It is thus preferable that the selecting means selects (i) a content associated with the combination information, and (ii) a content to be reproduced simultaneously with the content of (i), in accordance with the combination information.

According to the configuration, the selecting means selects (i) a content associated with the combination information, and (ii) a content to be reproduced simultaneously with the content of (i), in accordance with the combination information.

Therefore, even if the selection content information includes a content, which is not associated with the combination information, it is possible to select appropriate contents in accordance with the combination information.

Furthermore, the contents are classified into a plurality of groups, in which contents belonging to different groups can be reproduced simultaneously, the selection content information including group attribution information indicating groups to which each of the contents belongs. It is preferable that the selecting means selects, with reference to the group attribution information, a combination of contents belonging to different groups, from among the combinations indicated by the combination information.

Classifying contents into groups, as in the above-described configuration, simplifies management of contents. According to the configuration, since the selecting means selects a combination of contents belonging to different groups, of the combinations indicated by the combination information, with reference to the group attribution information, it is possible to select a combination of contents, which can be reproduced simultaneously.

The reproducing device is preferably configured such that, in the selection content information, contents are associated with the combination information on group basis, at least one piece of the combination information included in the selection content information being group designating information, which designates at least one of the groups. In a case where a group to which a selected content belongs is associated with the group designating information, the selecting means selects or optionally selects a content(s) belonging to a group designated by the group designating information.

In the selection content information according to the configuration, each of the groups is associated with the combination information, at least one piece of the combination information being group designating information, which designates at least one of the groups. If a group to which a selected content belongs is associated with the group designating information, a content(s) belonging to a group designated by the group designating information is selected or optionally selected.

That is, according to the configuration, groups to be selected (or optionally selected) are narrowed down by the group designating information. This makes it possible to easily select contents in an appropriate combination.

Further, the reproducing device is preferably configured such that, in the selection content information, contents are associated with the combination information, at least one piece of the combination information included in the selection content information including information, which indicates that an associated content is (i) required to be selected, (ii) optionally selected, or (iii) cannot be selected solely, the selecting means preferably selecting contents in accordance with the information.

In the selection content information according to the configuration, contents are associated with the combination information, at least one piece of the combination information including information indicating that the associated content (i) is required to be selected, (ii) optionally selected or (iii) cannot be selected solely. The selecting means selects contents in accordance with the information.

That is, according to the configuration, if there is a content associated with information indicating that the associated content is required to be selected, then the content is to be selected, whereas if there is a content associated with information indicating that the associated content optionally selected, then the content is to be optionally selected. Further, if there is a content associated with information indicating that the associated content cannot be selected solely, then the content is selected or optionally selected only when another content is selected. Therefore, contents can easily be selected in an appropriate combination.

Furthermore, the reproducing device is configured such that, in the selection content information, contents are associated with the combination information, the combination information being a combination identifier set for each combination of contents. The selecting means can be configured to select or optionally select contents associated with a same combination identifier.

In the selection content information according to the configuration, contents are associated with the combination information, the combination information being a combination identifier set for each combination of contents. The selecting means selects or optionally selects contents associated with a same combination identifier.

That is, according to the configuration, since contents associated with a same combination identifier are selected (or optionally selected), previously setting a same combination identifier for an appropriate combination of contents enables the selecting means to select contents in an appropriate combination.

According to the configuration, contents which are counterparts for combination are not designated directly. Therefore, in a case where a new content is added to the selection content information, it is possible simply by associating the content to be added with an appropriate combination identifier to incorporate the content into the combination.

A generating device in accordance with the present invention is a generating device for generating selection content information, the selection content information including at least information on contents which are available from a server at request by a reproducing device for reproducing contents, including: combination deciding means for deciding a combination of contents to be reproduced simultaneously, among the contents available from the server at request, the combination deciding means deciding the combination of contents with reference to combination condition information indicating combination conditions of the contents; and generating means for generating the selection content information, which includes combination information indicating the combination of contents decided by the combination deciding means.

A method for controlling a generating device in accordance with the present invention is a method for controlling a generating device for generating selection content information, the selection content information including at least information on contents which are available from a server at request by a reproducing device for reproducing contents, including the steps of: deciding a combination of contents to be reproduced simultaneously, of the contents available from the server at request, with reference to combination condition information indicating combination conditions of the contents; and generating the selection content information, which includes combination information indicating the combination of contents decided in the deciding step.

According to the configuration, the generating device decides a combination of contents to be reproduced simultaneously with reference to the combination condition information indicating combination conditions of the contents, and generates the selection content information, which includes the combination information indicating the decided combination of contents.

Therefore, by obtaining the selection content information thus generated, the reproducing device can specify (i) contents available from the server at request and (ii) a combination of contents, which meets the combination condition indicated by the combination condition information.

The reproducing device can therefore simultaneously reproduce contents in a combination which meets the combination condition. That is, the reproducing device can easily select contents in a combination which meets the combination condition, by deciding contents with reference to the combination information, without checking appropriateness of all possible combinations of contents.

A recording medium in accordance with the present invention is a computer-readable recording medium in which selection content information is stored, the selection content information including at least information on contents which are available from a server at request by a reproducing device for reproducing contents, the selection content information further including combination information indicating combinations of contents to be reproduced simultaneously, among the contents available from the server at request.

The reproducing device, which has read out the selection content information from the recording medium, can specify (i) contents available from the server at request, and (ii) a combination of content, which meets the combination condition indicated by the combination condition information.

This enables the reproducing device to simultaneously reproduce contents in the combination indicated by the combination information. That is, the reproducing device can easily select contents in an appropriate combination by deciding contents with reference to the combination information, without checking appropriateness of all possible combinations of contents.

A data structure in accordance with the present invention is a data structure of selection content information including at least information on contents which are available from a server at request by a reproducing device for reproducing contents, including: combination information indicating combinations of contents to be reproduced simultaneously, of the contents available from the server at request, the reproducing device (i) selecting a combination of contents from contents indicated by the selection content information, in accordance with the combination information, (ii) requesting the server to send the selected contents, and (iii) reproducing the contents sent from the server in response to the request, in the selected combination.

Since the data structure includes (i) information on contents available from the server at request, and (ii) combination information indicating combinations of contents to be reproduced simultaneously, the reproducing device can, by utilizing the data structure, (i) select a combination of contents from the contents indicated by the selection content information in accordance with the combination information, (ii) request the server to send the selected contents, and (iii) reproduce the contents sent from the server in response to the request, in the selected combination.

This enables the reproducing device to simultaneously reproduce the contents in a combination indicated by the combination information. That is, the reproducing device can easily select contents in an appropriate combination by deciding contents with reference to the combination information, without checking appropriateness of all possible combinations of contents.

In the data structure, each of the combinations of contents indicated by the combination information can be a combination of different types of contents.

In this case, it is possible to provide a variety of contents in a combination of different types of contents. Note that different types of contents refer to contents, whose data are outputted in different forms, such as video contents, audio content, and character contents. Two types of contents can be combined. Alternatively, three or more types of contents can be combined.

It is preferable that, in the selection content information, contents are associated with the combination information, at least one piece of the combination information included in the selection content information being information on compulsory counterparts for selection, which indicates contents required to be reproduced simultaneously, in a case where a selected content is associated with the information on compulsory counterparts for selection, the reproducing device also selecting a content(s) from among contents indicated by the information on compulsory counterparts for selection.

According to the configuration, in a case a selected content is associated with the information on compulsory counterparts for selection, the reproducing device will also select a content(s) indicated by the information on compulsory counterparts for selection. That is, a content associated with the information on compulsory counterparts for selection is selected not solely but in combination with another content indicated by the information on compulsory counterparts for selection

Therefore, according to the data structure, by associating a content, which is not desired to be selected solely, with the information on compulsory counterparts for selection, it is possible to prevent the content from being reproduced solely. This allows the reproducing device to reproduce contents in an appropriate combination.

Further, it is preferable that, in the selection content information, contents are associated with the combination information, at least one piece of the combination information included in the selection content information being information on optional candidates for selection, which indicates optional candidates of contents to be reproduced simultaneously, in a case where a selected content is associated with the information on optional candidates for selection, the reproducing device optionally selecting a content(s) from among contents indicated by the information on optional candidates for selection.

According to the configuration, in a case where a selected content is associated with the information on optional candidates for selection, the reproducing device optionally selects another content indicated by the information on optional candidates for selection. That is, a content associated with the information on optional candidates for selection can be selected solely or in combination with another content indicated by the information on optional candidates for selection.

According to the data structure, therefore, by associating a content, which can be selected solely or in combination with another content, with the information on optional candidates for selection, it is possible for the reproducing device to reproduce the content solely or in combination with an appropriate content.

Furthermore, it is preferable that the contents are classified into a plurality of groups, in which contents belonging to different groups can be reproduced simultaneously, the selection content information including group attribution information indicating groups to which each of the contents belongs, the reproducing device selecting, with reference to the group attribution information, a combination of contents belonging to different groups, from among the combinations indicated by the combination information.

Classifying contents into groups, as in the above-described configuration, simplifies management of contents. The reproducing device selects a combination of contents belonging to different groups, of the combinations indicated by the combination information, with reference to the group attribution information.

Therefore, the data structure enables the reproducing device to select a combination of contents capable of being reproduced simultaneously.

Moreover, the reproducing device and the generating device can be realized by a computer. In this case, the present invention encompasses (i) a control program which causes computers to serve as respective means of the reproducing device and the generating device, so as to realize the reproducing device and the generating device by a computer, and (ii) computer-readable recording medium in which the control program is stored.

### Industrial Applicability

The present invention is applicable to a reproducing device for reproducing a content obtained via a network.

### Reference Signs List

1 Client (Reproducing device)
2 Server (Generating device)
12 Client communication section (Communication section)
13 Content selecting section (Selecting means)
14 Request executing section (Requesting means)
15 Content reproducing section (Reproducing means)
23 Descriptive information sending section (Combination deciding means, generating means)
25 Contents
26 Descriptive information (Selection content information)

## Claims

1. A reproducing device which (i) selects contents with reference to selection content information including at least information on contents which are available from a server at request, (ii) requests the server to send the selected contents, and (iii) reproduces the contents sent in response to the request, the reproducing device comprising:
selecting means for selecting, from the contents available from the server at request, a combination of contents with reference to combination information included in the selection content information, the combination information indicating combinations of contents to be reproduced simultaneously;
requesting means for requesting the server to send the contents selected by the selecting means; and
reproducing means for reproducing the contents sent from the server in response to the request of the requesting means, in the combination selected by the selecting means.

2. The reproducing device as set forth in Claim 1, wherein:
in the selection content information, contents are associated with the combination information,
at least one piece of the combination information included in the selection content information is information on compulsory counterparts for selection, which indicates contents required to be reproduced simultaneously, and
in a case where a selected content is associated with the information on compulsory counterparts for selection, the selecting means also selects a content(s) from among contents indicated by the information on compulsory counterparts for selection.

3. The reproducing device as set forth in Claim 1 or 2, wherein:
in the selection content information, contents are associated with the combination information,
at least one piece of the combination information included in the selection content information is information on optional candidates for selection, which indicates optional candidates of contents to be reproduced simultaneously, and
in a case where a selected content is associated with the information on optional candidates for selection, the selecting means optionally selects a content(s) from among contents indicated by the information on optional candidates for selection.

4. A reproducing device as set forth in any one of Claims 1 through 3, further comprising a communication section for receiving the selection content information from an external device, wherein:
the selecting means selects contents with the use of the selection content information received via the communication section.

5. The reproducing device as set forth in any one of Claims 1 through 4, wherein:
in the selection content information, part of the contents available from the server at request is associated with the combination information, and
in accordance with the combination information, the selecting means selects (i) a content associated with the combination information, and (ii) a content to be reproduced simultaneously with the content of (i).

6. The reproducing device as set forth in any one of Claims 1 through 5, wherein:
the contents are classified into a plurality of groups, in which contents belonging to different groups can be reproduced simultaneously,
the selection content information includes group attribution information indicating groups to which each of the contents belongs, and
with reference to the group attribution information, the selecting means selects a combination of contents belonging to different groups, from among the combinations indicated by the combination information.

7. The reproducing device as set forth in Claim 6, wherein:
in the selection content information, contents are associated with the combination information on group basis,
at least one piece of the combination information included in the selection content information is group designating information, which designates at least one of the plurality of groups, and
in a case where a group to which a selected content belongs is associated with the group designating information, the selecting means selects or optionally selects a content(s) belonging to the group designated by the group designating information.

8. The reproducing device as set forth in any one of Claims 1 through 7, wherein:
in the selection content information, contents are associated with the combination information,
at least one piece of the combination information included in the selection content information includes information, which indicates that an associated content is (i) required to be selected, (ii) optionally selected, or (iii) cannot be selected solely, and
the selecting means selects contents in accordance with the information.

9. The reproducing device as set forth in Claim 1, wherein:
in the selection content information, contents are associated with the combination information,
the combination information is a combination identifier set for each combination of contents, and
the selecting means selects or optionally selects contents associated with a same combination identifier.

10. A method for controlling a reproducing device which (i) selects contents with reference to selection content information including at least information on contents which are available from a server at request, (ii) requests the server to send the selected contents, and (iii) reproduces the contents sent in response to the request, the method comprising the steps of:
selecting, from the contents available from the server at request, a combination of contents with reference to combination information included in the selection content information, the combination information indicating combinations of contents to be reproduced simultaneously;
requesting the server to send the contents selected in the selecting step; and
reproducing the contents sent from the server in response to the request in the requesting step, in the combination selected in the selecting step.

11. A generating device for generating selection content information, the selection content information including at least information on contents which are available from a server at request by a reproducing device for reproducing contents, the generating device comprising:
combination deciding means for deciding a combination of contents to be reproduced simultaneously, among the contents available from the server at request, the combination deciding means deciding the combination of contents with reference to combination condition information indicating combination conditions of the contents; and
generating means for generating the selection content information, which includes combination information indicating the combination of contents decided by the combination deciding means.

12. A method for controlling a generating device for generating selection content information, the selection content information including at least information on contents which are available from a server at request by a reproducing device for reproducing contents, comprising the steps of:
deciding a combination of contents to be reproduced simultaneously, of the contents available from the server at request, with reference to combination condition information indicating combination conditions of the contents; and
generating the selection content information, which includes combination information indicating the combination of contents decided in the deciding step.

13. A computer-readable recording medium in which selection content information is stored, the selection content information including at least information on contents which are available from a server at request by a reproducing device for reproducing contents,
the selection content information further including combination information indicating combinations of contents to be reproduced simultaneously, among the contents available from the server at request.

14. A data structure of selection content information including at least information on contents which are available from a server at request by a reproducing device for reproducing contents, including:
combination information indicating combinations of contents to be reproduced simultaneously, of the contents available from the server at request, the reproducing device (i) selecting a combination of contents from contents indicated by the selection content information, in accordance with the combination information, (ii) requesting the server to send the selected contents, and (iii) reproducing the contents sent from the server in response to the request, in the selected combination.

15. The data structure as set forth in Claim 14, wherein:
each of the combinations of contents indicated by the combination information is a combination of different types of contents.

16. The data structure as set forth in Claim 14 or 15, wherein:
in the selection content information, contents are associated with the combination information,
at least one piece of the combination information included in the selection content information is information on compulsory counterparts for selection, which indicates contents required to be reproduced simultaneously, and
in a case where a selected content is associated with the information on compulsory counterparts for selection, the reproducing device also selects a content(s) from among contents indicated by the information on compulsory counterparts for selection.

17. The data structure as set forth in any one of Claims 14 through 16, wherein:
in the selection content information, contents are associated with the combination information,
at least one piece of the combination information included in the selection content information is information on optional candidates for selection, which indicates optional candidates of contents to be reproduced simultaneously, and
in a case where a selected content is associated with the information on optional candidates for selection, the reproducing device optionally selects a content(s) from among contents indicated by the information on optional candidates for selection.

18. The data structure as set forth in any one of Claims 14 through 17, wherein:
the contents are classified into a plurality of groups, in which contents belonging to different groups can be reproduced simultaneously,
the selection content information includes group attribution information indicating groups to which each of the contents belongs, and
with reference to the group attribution information, the reproducing device selects a combination of contents belonging to different groups, from among the combinations indicated by the combination information.

19. A control program for operating a reproducing device as recited in any one of Claims 1 through 9, wherein:
the control program causes a computer to serve as the means.

20. A control program for operating a generating device as recited in Claim 11, wherein:
the control program causes a computer to serve as the means.

21. A computer-readable recording medium, in which
a control program as recited in Claim 19 or 20 is stored.
